# EUROPEAN PATENT SPECIFICATION

(11) **EP 1 640 391 B1**
(45) Date of publication and mention of the grant of the patent: **19.12.2012**
(21) Application number: 04746533.1
(22) Date of filing: 21.06.2004
(51) Int. Cl.: C08F 290/02

(54) **CURING COMPOSITION**
HÄRTENDE ZUSAMMENSETZUNG
COMPOSITION DE DURCISSEMENT

(30) Priority: 30.06.2003 JP 2003188573
(43) Date of publication of application: 29.03.2006
(73) Proprietor: KANEKA CORPORATION, Osaka-shi, Osaka 530-8288 (JP)
(72) Inventor: OKADA, Kenji 3-3-201, Sakuraguchicho 5-chome, Hyogo 6570036 (JP); NAKAGAWA, Yoshiki, Osaka-Factory, Settsu-shi, Osaka 5660072 (JP)
(74) Representative: Hart-Davis, Jason
(86) International application number: PCT/JP2004/009064
(87) International publication number: WO 2005/000927

(56) References cited:
- EP-A- 1 160 266
- EP-A- 1 179 567
- WO-A1-99/65963
- DE-A- 10 010 416
- JP-A- 8 003 412
- JP-A- 2002 338 611
- JP-A- 2003 073 520
- DATABASE WPI Section Ch, Week 199802 Thomson Scientific, London, GB; Class A60, AN 1998-014850 XP002541039 & JP 09 278932 A (TOSOH CORPORATION) 28 October 1997 (1997-10-28)

## Description

### Technical Field

The present invention relates to a curable composition. In particular, the present invention relates to a curable composition capable of providing a cured product having good mechanical properties by controlling photopolymerization and thermal polymerization by adding a monoacrylate phenolic antioxidant to a vinyl polymer having a (meth)acryloyl group.

### Background Art

In the case of producing a cured product by radical photocuring or radical thermal curing of a vinyl polymer or a poly(meth)acrylate having a (meth)acryloyl group in the molecule, polymerization progresses rapidly and controlling thereof is difficult, and as a result if polymerization is excessive it will become over-crosslinked, and often times the cured product obtained will have insufficient mechanical strength such as insufficient elongation. As a method to control polymerization, polymerization for the polymer containing methacryloyl groups may be reduced compared to the case of the polymer containing acryloyl groups an acryloyl group by using a methacryloyl group as the functional group involved in polymerization. However, in doing so polymerization rate is often extremely reduced and this is not practical. Further, a polymerization inhibitor may be used in general. This inhibitor itself is aimed at the intention of inhibiting polymerization and is therefore not suitable for controlling polymerization. On the other hand, an antioxidant is sometimes added to improve the heat resistance and weather resistance of the cured product which is obtained after polymerization. However, this is not used for the intention of improving the initial physical property of the cured product (for example, Patent Document 1 and Patent Document 2).
[Patent Document 1] Japanese Patent Laid-Open No. 2000-72816
[Patent Document 2] Japanese Patent Laid-Open No. 2000-95826

### Disclosure of the Invention

An object of the present invention is to provide a curable composition capable of providing a cured product having good mechanical properties by radical photocuring or radical thermal curing of a vinyl polymer or a poly(meth)acrylate having a (meth)acryloyl group at the molecular terminal by means of controlling polymerization.

As a result of intensive studies to solve the above problem, the present inventors have found that a cured product with good mechanical properties can be obtained by adding a monoacrylate phenolic antioxidant to a curable system containing vinyl polymer with (meth)acryloyl group which can be cured by radical polymerization reaction, and thereby completed the present invention.

Accordingly, the present invention relates to a curable composition comprising:
(A) a vinyl polymer (I) comprising, at the molecular terminal, at least one group represented by the general formula (1):

   CH₂=C(R^{a})-C(O)O (1)

   wherein R^{a} represents a hydrogen atom or a monovalent organic group having 1 to 20 carbon atoms, and
(B) a monoacrylate phenolic antioxidant.

The present invention also relates to a method for improving mechanical properties of a cured product obtained from a curable composition comprising (A) a vinyl polymer having, at the molecular terminal, at least one group represented by the general formula (1):

CH₂=C(R^{a}) -C(O) O- (1)

wherein R^{a} represents a hydrogen atom or a monovalent organic group having 1 to 20 carbon atoms, by suppressing polymerization reaction the method comprising adding (B) a monoacrylate phenolic antioxidant to the curable composition.

The present invention also relates to a cured product obtained from the above curable composition.

The present invention can provide a curable composition for molding which comprises a (meth)acryloyl group-containing vinyl polymer and a monoacrylate phenolic antioxidant as essential components and thus can provide a cured product with excellent mechanical properties. This vinyl polymer is preferably produced by living radical polymerization, further preferably atom transfer radical polymerization. Thus, the molecular weight and functionalization ratio can be precisely controlled, and physical properties can be more appropriately controlled.

### Best Mode for Carrying Out the Invention

The curable composition of the present invention will be described in detail below.

### <<Vinyl Polymer (I)>>

### <Main Chain>

The vinyl monomer constituting the main chain of the vinyl polymer (I) of the present invention is not particularly limited, and various monomers can be used. Examples of a monomer include: a (meth)acrylic monomer such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl) trimethoxysilane, an ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, 2-perfluorohexadecylethyl (meth)acrylate; an aromatic vinyl monomer such as styrene, vinyl toluene, α-methylstyrene, chlorstyrene, styrene sulfonate, and a salt thereof; a fluorine-containing vinyl monomer such as perfluoroethylene, perfluoropropylene, vinylidene fluoride; a silicon-containing vinyl monomer such as vinyltrimethoxysilane and vinyltriethoxysilane; maleic anhydride, maleic acid, and monoalkyl and dialkyl esters of maleic acid; fumaric acid, and monoalkyl and dialkyl esters of fumaric acid; a maleimide monomer such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; an acrylonitrile monomer such as acrylonitrile and methacrylonitrile; amide-containing vinyl monomer such as acrylamide, methacrylamide, a vinyl ester such as vinyl acetate, vinyl propionate, vinyl pivalate, vinyl benzoate, and vinyl cinnamate; an alkene such as ethylene and propylene; a conjugated diene such as butadiene and isoprene; vinyl chloride, vinylidene chloride, allyl chloride, and allyl alcohol. These may be used alone, or two or more may be copolymerized.

It is preferable that the main chain of the vinyl polymer (I) is produced by polymerization using as the main component at least one monomer selected from the group consisting of a (meth)acrylic monomer, an acrylonitrile monomer, an aromatic vinyl monomer, a fluorine-containing vinyl monomer and a silicon-containing vinyl monomer. "As the main component" as used herein means, the monomer constitutes 50 mol % or more, preferably 70 mol % or more of the total monomer units of the vinyl polymer.

Among these, an aromatic vinyl monomer and a (meth)acrylic monomer are preferable in view of physical properties etc. of the product to be obtained. An acrylic ester monomer and a methacrylic ester monomer are more preferable, an acrylic ester monomer is particularly preferable, and butyl acrylate is further preferable. According to the present invention, these preferable monomers and other monomers may be copolymerized, and further block copolymerized. In such a case, it is preferable that these preferable monomers are incorporated at 40% by weight or more. From this point of view, vinyl polymer (I) is preferably a poly(meth)acrylate, more preferably a polyacrylate, further preferably an acrylic ester polymer. In the above expressions, (meth)acrylic acid for example indicates acrylic acid and/or methacrylic acid.

The molecular weight distribution of the vinyl polymer (I) of the present invention, i.e. the ratio of the weight average molecular weight (Mw) to the number average molecular weight (Mn) (Mw/Mn) measured using gel permeation chromatography (GPC), is not particularly limited. It is preferably less than 1.8, preferably 1.7 or less, more preferably 1.6 or less, further preferably 1.5 or less, particularly preferably 1.4 or less, and most preferably 1.3 or less. Measurement of GPC in the present invention typically uses chloroform as the mobile phase, the measurement is carried out on a polystyrene gel column, and the number average molecular weight etc. can be calculated on the basis of a polystyrene standard sample.

The number average molecular weight of the vinyl polymer (I) of the present invention is not particularly limited. When measured by gel permeation chromatography, it is preferably 500 or more, more preferably 1,000 or more, further preferably 3,000 or more, and particularly preferably 5,000 or more. It is also preferably 1,000,000 or less, and more preferably 100,000 or less. When the molecular weight is too low, intrinsic properties of the vinyl polymer are not expressed well. On the other hand, when it is too high, the vinyl polymer becomes difficult to handle.

### <Method for synthesizing the Polymer>

The method for producing the vinyl polymer (I) of the present invention is not particularly limited. The vinyl polymer is generally produced by anionic polymerization or radical polymerization. It is preferable to use radical polymerization because monomers are of general-purpose use or can be easily controlled. Among radical polymerization, production by living radical polymerization or radical polymerization using a chain transfer agent is preferable. The former method is particularly preferable.

The radical polymerization used to synthesize the vinyl polymer (I) of the present invention can be categorized into "general radical polymerization" in which a monomer having a particular functional group and a vinyl monomer are simply copolymerized using for example an azo compound or a peroxide as the polymerization initiator, and "control radical polymerization" in which it is possible to introduce a particular functional group at a controlled site such as the terminal.

Although "general radical polymerization" is a simple method, In the case of using this method, a monomer having a particular functional group is introduced into the polymer only at a certain probability. When a polymer with high functionalization rate is to be obtained, the monomer must be used at a considerably large amount. On the other hand, when only a small amount of the monomer is used, there exists a problem that the percentage of the polymer into which this particular functional group is not introduced increases. In addition, since this is a free radical polymerization, there also exists a problem that only a polymer having wide molecular weight distribution and high viscosity can be obtained.

"Control radical polymerization" can further be categorized into "chain transfer agent method" in which a vinyl polymer having a functional group at the terminal can be obtained by polymerization using a chain transfer agent having a particular functional group and "living radical polymerization" in which a polymer having the molecular weight almost as designed can be obtained by extension without for example termination reaction at the polymerization growth terminal.

A polymer with high functionalization rate can be obtained by "chain transfer agent method," although a considerably large amount of a chain transfer agent having a particular functional group relative to the initiator is required, and thus leads to financial problems including disposal. In addition, as with the aforementioned "general radical polymerization," this is a free radical polymerization and therefore there also exists a problem that only a polymer having wide molecular weight distribution and high viscosity can be obtained.

Radical polymerizations are thought to be difficult to control due to high polymerization velocity and tendency of the reaction to terminate by for example coupling among radicals. Unlike these polymerization methods, although "living radical polymerization" is a radical polymerization, termination reaction does not tend to occur, polymer with narrow molecular weight distribution (Mw/Mn of about 1.1 to 1.5) can be obtained, and molecular weight can be freely controlled by controlling the charge ratio between the monomer and the initiator.

Accordingly, "living radical polymerization" allows for obtaining a polymer with narrow molecular weight distribution and low viscosity. In addition, since a monomer having a particular functional group can be introduced into virtually any site within the polymer, this production method is more preferable for producing a vinyl polymer having the above particular functional group.

Living polymerization in a narrow sense means a polymerization in which the termini remains constantly active and the molecular chain keeps growing, although generally, pseudo-living polymerization in which inactive and active termini are in an equilibrium state but still grow is also included. Its definition in the present invention is the latter.

In recent years, the "living radical polymerization" has actively been studied by various study groups. Examples of such studies include, for example, a method using cobalt-porphyrin complex as described in Journal of American Chemical Society (J. Am. Chem. Soc.), 1994, vol. 116, p. 7943; a method using a radical scavenger such as a nitroxide compound as described in Macromolecules, 1994, vol. 27, pp. 7228; and "atom transfer radical polymerization" in which organic halide etc. is used as an initiator and a transition metal complex is used as a catalyst (Atom Transfer Radical Polymerization: ATRP).

Among the "living radical polymerizations," "atom transfer radical polymerization," in which a vinyl monomer is polymerized using for example an organic halide or a halogenated sulfonyl compound as the initiator and a transition metal complex as the catalyst, is further preferable as the method for producing a vinyl polymer having a particular functional group. The reasons for this are as follows: the above characteristics of the "living radical polymerization"; a halogen etc. which is relatively useful for conversion reaction of the functional group is present at the terminal; and there is a high degree of flexibility in designing of the initiator and catalyst. Examples of this atom transfer radical polymerization include Matyjaszewski et al., Journal of American Chemical Society (J. Am. Chem. Soc.), 1995, vol. 117, p. 5614; Macromolecules, 1995, vol. 28, p. 7901; Science, 1996, vol. 272, p. 866; WO96/30421, WO97/18247 or Sawamoto et al., Macromolecules, 1995, vol. 28, p. 1721.

It is not particularly limited which of these methods is used in the present invention. However, control radical polymerization is typically used, and further living radical polymerization is preferable because it is easy to control. Atom transfer radical polymerization is particularly preferable.

Firstly, a control radical polymerization, i.e. polymerization using a chain transfer agent will be described. Radical polymerization using a chain transfer agent (telomer) is not particularly limited. The following two methods are examples of a method for obtaining a vinyl polymer having a terminal structure suitable for the present invention.

Japanese Patent Laid-Open No. 4-132706 describes a method for obtaining a polymer having a halogen terminal by using a halogenated hydrocarbon as the chain transfer agent. Japanese Patent Laid-Open No. 61-271306, Japanese Patent No. 2594402, and Japanese Patent Laid-Open No. 54-47782 describes a method for obtaining a polymer having a hydroxyl group terminal by using for example hydroxyl group-containing mercaptan or hydroxyl group-containing polysulfide as the chain transfer agent.

Next, living radical polymerization will be described.

Among these, a method using a radical scavenger such as a nitroxide compound will be described first. This polymerization generally uses a stable nitroxy free radical (=N-O•) as a radical scavenger. Preferable compounds include, but are not limited to, a nitroxy free radical from a cyclic hydroxyamine such as 2,2,6,6-substituted-1-piperidinyloxy radical or 2,2,5,5-substituted-1-pyrrolidinyloxy radical. A suitable substituent includes an alkyl group having 4 or less carbon atoms such as methyl and ethyl groups. A particular nitroxy free radical compound includes, but is not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N,N-di-t-butylamineoxy radical. A stable free radical such as galvinoxyl free radical may be used instead of the nitroxy free radical.

The above radical scavenger is used together with a radical generator. It is thought that the reaction product of the radical scavenger and the radical generator serves as the polymerization initiator to allow the polymerization of addition polymer monomers to progress. The ratio of the radical scavenger and generator is not particularly limited. One mol of the radical scavenger to 0.1 to 10 mols of the radical generator is suitable.

Various compounds can be used as a radical generator. A peroxide which can generate a radical under polymerization temperature condition is preferable. Examples of this peroxide include, but are not limited to, a diacyl peroxide such as benzoyl peroxide and lauroyl peroxide; a dialkyl peroxide such as dicumyl peroxide and di-t-butyl peroxide; a peroxy carbonate such as diisopropylperoxy dicarbonate and bis(4-t-butylcyclohexyl)peroxy dicarbonate; and an alkyl perester such as t-butylperoxy octoate and t-butylperoxybenzoate. Benzoyl peroxide is particularly preferable. In addition, a radical generator, for example a radical-generating azo compound such as azobisisobutylonitrile may be used instead of a peroxide.

As reported in Macromolecules, 1995, 28, 2993, an alkoxyamine compound of the following formula may be used as the initiator instead of using the radical scavenger and generator together.

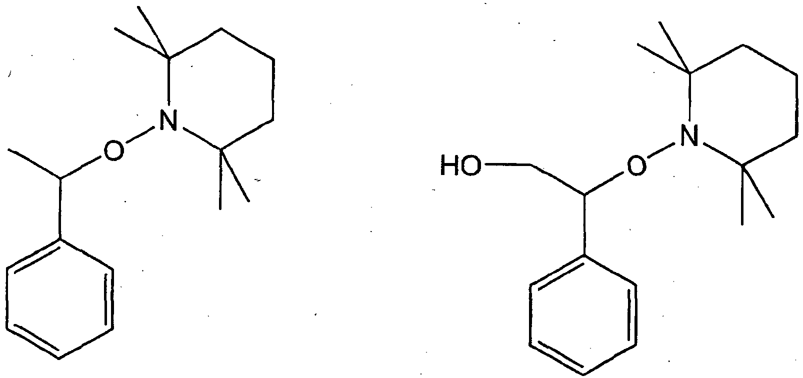

In the case of using the alkoxyamine compound as the initiator, a polymer having a functional group at the terminal can be obtained by using a compound such as those shown in the above formula having a functional group such as a hydroxyl group. A polymer having a functional group at the terminal can be obtained by employing this step in the method of the present invention.

The monomer, the solvent, and the polymerization condition such as polymerization temperature employed in the polymerization using the above radical scavenger such as a nitroxide compound are not limited. Those used in atom transfer radical polymerization as described below may be used.

Atom transfer radical polymerization, which is more preferable as the living radical polymerization of the present invention, will be described next.

In atom transfer radical polymerization, an organic halide, in particular an organic halide having a highly reactive carbon-halogen bond (for example, a carbonyl compound having a halogen at the α-position, or a compound having a halogen at the benzyl position), or a halogenated sulfonyl compound etc. are used as the initiator.

Specific examples of this compound include:
C₆H₅-CH₂X, C₆H₅-C(H) (X)CH₃, and C₆H₅-C(X) (CH₃)₂
wherein C₆H₅ is a phenyl group, and X is chlorine, bromine, or iodine;
R³-C(H)(X)-CO₂R⁴, R³-C(CH₃)(X)-CO₂R⁴, R³-C (H) (X)-C(O) R⁴, and R³-C(CH₃)(X)-C(O)R⁴,
wherein R³ and R⁴ are a hydrogen atom or an alkyl group having 1 to 20 carbon atoms, an aryl group having 6 to 20 carbon atoms, or an aralkyl group having 7 to 20 carbon atoms, and X is chlorine, bromine, or iodine; and R³-C₆H₄-SO₂X
wherein R³ is a hydrogen atom or an alkyl group having 1 to 20 carbon atoms, an aryl group having 6 to 20 carbon atoms, or an aralkyl group having 7 to 20 carbon atoms, and X is chlorine, bromine, or iodine.

An organic halide or a halogenated sulfonyl compound having a functional group other than those that initiate polymerization can be used as the initiator for atom transfer radical polymerization. In such cases, a vinyl polymer having a functional group at one side of the main chain termini, and a structure represented by the following general formula (2) at the other side of main chain termini, is produced. Examples of this functional group include alkenyl, crosslinkable silyl, hydroxyl, epoxy, amino, and amide groups.

An organic halide having an alkenyl group is not limited. Examples are those having a structure represented by the general formula 6:

R⁶R⁷C(X)-R⁸-R⁹-C(R⁵)=CH₂ (6)

wherein R⁵ is a hydrogen atom or a methyl group, R⁶ and R⁷ are a hydrogen atom, or a monovalent alkyl group having 1 to 20 carbon atoms, an aryl group having 6 to 20 carbon atoms, or an aralkyl group having 7 to 20 carbon atoms, or are linked to one another at the other terminal; R⁸ is - C(O)O- (ester group), -C(O)- (keto group), or o-, m-, p-phenylene group, R⁹ is a direct bond, or a divalent organic group having 1 to 20 carbon atoms which may comprise one or more ether bond(s), and X is chlorine, bromine, or iodine.

Examples of substituents R⁶ and R⁷ include a hydrogen atom, methyl, ethyl, n-propyl, isopropyl, butyl, pentyl, hexyl, phenyl, and benzyl groups. R⁶ and R⁷ may be linked at the other terminal to form a cyclic skeleton.

Examples of a divalent organic group having 1 to 20 carbon atoms which may comprise one or more ether bond(s) of R⁹ include, for example, an alkylene group having 1 to 20 carbon atoms which may comprise one or more ether bond (s).

. Specific examples of an organic halide having an alkenyl group represented by the general formula 6 include:
XCH₂C(O) O (CH₂)ₙCH=CH₂,
H₃CC(H) (X)C(O)O(CH₂)ₙCH=CH₂, and
(H₃C)₂C(X)C(O)O(CH₂)ₙCH=CH₂,
CH₃CH₂C(H)(X)C(O)O(CH₂)ₙCH=CH₂, 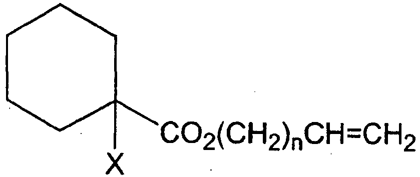 wherein X is chlorine, bromine, or iodine, and n is an integer from 0 to 20;
XCH₂C(O)O(CH₂)ₙO(CH₂)ₘCH=CH₂,
H₃CC(H)(X)C(O)O(CH₂)ₙO(CH₂)ₘCH=CH₂,
(H₃C)₂C(X)C(O)O(CH₂)ₙO(CH₂)ₘCH=CH₂, and
CH₃CH₂C(H)(X)C(O)O(CH₂)ₙO(CH₂)ₘCH=CH₂, 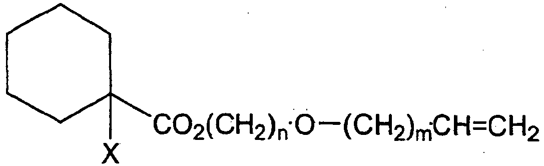 wherein X is chlorine, bromine, or iodine, n is an integer from 1 to 20, and m is an integer from 0 to 20;
o, m, p- (CH₂- C₆H₄- CH₂) ₙ - CH= CH₂,
o, m, p-XCH₂-C₆H₄-(CH₂)ₙ-CH=CH₂, and
o, m, p-CH₃C(H)(X)-C₆H₄-(CH₂)ₙ-CH=CH₂, and
o, m, p-CH₃CH₂C(H)(X)-C₆H₄-(CH₂)ₙ-CH=CH₂,
wherein X is chlorine, bromine, or iodine, and n is an integer from 0 to 20;
o, m, p-XCH₂-C₆H₄-(CH₂)ₙ-O-(CH₂)ₘ-CH=CH₂,
o, m, p-CH₃C(H)(X)-C₆H₄-(CH₂)ₙ-O-(CH₂)ₘ-CH=CH₂, and
o, m, p-CH₃CH₂C(H)(X)-C₆H₄-(CH₂)ₙ-O-(CH₂)ₘCH=CH₂,
wherein X is chlorine, bromine, or iodine, n is an integer from 1 to 20, and m is an integer from 0 to 20;
o, m, p-XCH₂-C₆H₄-O-(CH₂)ₙ-CH=CH₂,
o, m, p-CH₃C(H)(X)-C₆H₄-O-(CH₂)ₙ-CH=CH₂, and
o, m, p-CH₃CH₂C(H)(X)-C₆H₄-O-(CH₂)ₙ-CH=CH₂,
wherein X is chlorine, bromine, or iodine, and n is an integer from 0 to 20; and
o, m, p-XCH₂-C₆H₄-O-(CH₂)ₙ-O-(CH₂)ₘ-CH=CH₂,
o, m, p-CH₃C(H)(X)-C₆H₄-O-(CH₂)ₙ-O-(CH₂)ₘ-CH=CH₂, and
o, m, p-CH₃CH₂C(H)(X)-C₆H₄-O-(CH₂)ₙ-O-(CH₂)ₘ-CH=CH₂,
wherein X is chlorine, bromine, or iodine, n is an integer from 1 to 20, and m is an integer from 0 to 20.

Examples of an organic halide having an alkenyl group further include the compounds shown in the general formula 7:

H₂C=C(R⁵)-R⁹-C(R⁶)(X)-R¹⁰-R¹ (7)

wherein R⁵, R⁶, R⁷, R⁹, and X are as described above; and R¹⁰ represents a direct bond, -C(O)O- (ester group), -C(O)-(keto group), or o-, m-, p-phenylene group.

R⁹ is a direct bond, or a divalent organic group having 1 to 20 carbon atoms (which may comprise one or more ether bond(s)). When it is a direct bond, a vinyl group is bonded to the carbon to which a halogen is bonded, and this becomes a halogenated allyl compound. In this case, since the carbon-halogen bond is activated by the adjacent vinyl group, it is not necessary to have a C(O)O group or a phenylene group as R¹⁰, and this may be a direct bond. When R⁹ is not a direct bond, it is preferable to have a C(O)O, C (O), or phenylene group as R¹⁰ for activating the carbon-halogen bond.

Specific examples of a compound of the general formula 7 include:
CH₂=CHCH₂X, CH₂=C(CH₃)CH₂X,
CH₂=CHC(H)(X)CH₃, CH₂=C(CH₃)C(H)(X)CH₃,
CH₂=CHC(X)(CH₃)₂, CH₂=CHC(H)(X)C₂H₅,
CH₂=CHC(H)(X)CH(CH₃)₂,
CH₂=CHC(H)(X)C₆H₅, CH₂=CHC(H)(X)CH₂C₆H₅,
CH₂=CHCH₂C(H)(X)-CO₂R,
CH₂=CH(CH₂)₂C(H)(X)-CO₂R,
CH₂=CH(CH₂)₃C(H)(X)-CO₂R,
CH₂=CH (CH₂)₈C(H)(X)-CO₂R,
CH₂=CHCH₂C(H)(X)-C₆H₅,
CH₂=CH(CH₂)₂C(H)(X)-C₆H₅, and
CH₂=CH(CH₂)₃C(H)(X)-C₆H₅,
wherein X is chlorine, bromine, or iodine, R is an alkyl group having 1 to 20 carbon atoms, an aryl group having 6 to 20 carbon atoms, or an aralkyl group having 7 to 20 carbon atoms.

Specific examples of a halogenated sulfonyl compound having an alkenyl group include:
o-,m-,p-CH₂=CH-(CH₂)ₙ-C₆H₄-SO₂X, and
o-, m-, p-CH₂=CH-(CH₂)ₙ-O-C₆H₄-SO₂X,
wherein X is chlorine, bromine, or iodine; and n is an integer from 0 to 20.

An organic halide having the above crosslinkable silyl group is not particularly limited. Examples are those having a structure represented by the general formula 8:

R⁶R⁷C(X)-R⁸-R⁹-C(H)(R⁵)CH₂-[Si(R¹¹)_{2-b}(Y)_{b}O]ₘ-Si(R¹²)₃₋ₐ(Y)ₐ (8)

wherein R⁵, R⁶, R⁷, R⁸, R⁹, and X are as described above, R¹¹ and R¹² are both an alkyl group having 1 to 20 carbon atoms, an aryl group having 6 to 20 carbon atoms, an aralkyl group having 7 to 20 carbon atoms, or a triorganosiloxy group represented by (R'')₃SiO- (R'' is a monovalent hydrocarbon group having 1 to 20 carbon atoms, in which the three R'' may be the same or different), when two or more of R¹¹ or R¹² exist, these may be the same or different, Y is a hydroxyl group or a hydrolyzable group, in which when two or more of Y exist, they may be the same or different, a is 0, 1, 2, or 3; b is 0, 1, or 2, and m is an integer from 0 to 19; provided that a + mb ≥ 1.

Examples of a hydrolyzable group Y include, for example, a hydrogen atom, halogen atom, alkoxy, acyloxy, ketoximate, amino, amide, acid amide aminooxy, mercapto, and alkenyloxy groups.

Specific examples of a compound of the general formula 8 include:
XCH₂C(O)O (CH₂)ₙSi (OCH₃)₃,
CH₃C(H)(X)C(O)O(CH₂)ₙSi(OCH₃)₃,
(CH₃)₂C(X)C(O)O(CH₂)ₙSi(OCH₃)₃,
XCH₂C(O)O(CH₂)ₙSi(CH₃)(OCH₃)₂,
CH₃C(H)(X)C(O)O(CH₂)ₙSi(CH₃)(OCH₃)₂, and
(CH₃)₂C(X)C(O)O(CH₂)ₙSi(CH₃)(OCH₃)₂,
wherein X is chlorine, bromine, iodine, and n is an integer from 0 to 20;
XCH₂C(O)O(CH₂)ₙO(CH₂)ₘSi(OCH₃)₃,
H₃CC(H)(X)C(O)O(CH₂)ₙO(CH₂)ₘSi(OCH₃)₃,
(H₃C)₂C(X)C(O)O(CH₂)ₙO(CH₂)ₘSi(OCH₃)₃,
CH₃CH₂C(H)(X)C(O)O(CH₂)ₙO(CH₂)ₘSi(OCH₃)₃,
XCH₂C(O)O(CH₂)ₙO(CH₂)ₘSi(CH₃)(OCH₃)₂,
H₃CC(H)(X)C(O)O(CH₂)ₙO(CH₂)ₘ-Si(CH₃)(OCH₃)₂,
(H₃C)₂C(X)C(O)O(CH₂)ₙO(CH₂)ₘ-Si(CH₃)(OCH₃)₂, and
CH₃CH₂C(H)(X)C(O)O(CH₂)ₙO(CH₂)ₘ-Si(CH₃)(OCH₃)₂,
wherein X is chlorine, bromine, iodine, n is an integer from 1 to 20, and m is an integer from 0 to 20;
o, m, p-XCH₂-C₆H₄-(CH₂)₂Si(OCH₃)₃,
o, m, p-CH₃C(H)(X)-C₆H₄-(CH₂)₂Si(OCH₃)₃,
o, m, p-CH₃CH₂C(H)(X)-C₆H₄-(CH₂)₂Si(OCH₃)₃,
o, m, p-XCH₂-C₆H₄-(CH₂)₃Si(OCH₃)₃,
o, m, p-CH₃C(H)(X)-C₆H₄-(CH₂)₃Si(OCH₃)₃,
o, m, p-CH₃CH₂C(H)(X)-C₆H₄-(CH₂)₃Si(OCH₃)₃,
o, m, p-XCH₂-C₆H₄-(CH₂)₂-O-(CH₂)₃Si(OCH₃)₃,
o, m, p-CH₃C(H)(X)-C₆H₄-(CH₂)₂-O-(CH₂)₃Si(OCH₃)₃,
o, m, p-CH₃CH₂C(H)(X)-C₆H₄-(CH₂)₂-O-(CH₂)₃-Si(OCH₃)₃,
o, m, p-XCH₂-C₆H₄-O-(CH₂)₃Si(OCH₃)₃,
o, m, p-CH₃C(H)(X)-C₆H₄-O-(CH₂)₃Si(OCH₃)₃,
o, m, p-CH₃CH₂C(H)(X)-C₆H₄-O-(CH₂)₃-Si(OCH₃)₃,
o, m, p-XCH₂-C₆H₄-O-(CH₂)₂-O-(CH₂)₃-Si(OCH₃)₃,
o, m, p-CH₃C(H)(X)-C₆H₄-O-(CH₂)₂-O-(CH₂)₃Si(OCH₃)₃,
or m, p-CH₃CH₂C(H)(X)C₆H₄O-(CH₂)₂-O-(CH₂)₃Si(OCH₃)₃, and
wherein X is chlorine, bromine, or iodine.

Examples of an organic halide having the above crosslinkable silyl group further include those having the structure represented by the general formula 9:

(R¹²)₃₋ₐ(Y)ₐSi-[OSi(R¹¹)_{2-b}(Y)_{b}]ₘ-CH₂-C(H)(R⁵)-R⁹-C(R⁶)(X)-R¹⁰-R⁷ (9)

wherein R⁵, R⁶, R⁷, R⁹, R¹⁰, R¹¹, R¹², a, b, m, X, and Y are as described above.

Specific examples of this compound include:
(CH₃O)₃SiCH₂CH₂C(H) (X) C₆H₅,
(CH₃O)₂(CH₃)SiCH₂CH₂C(H)(X)C₆H₅,
(CH₃O)₃Si(CH₂)₂C(H)(X)-CO₂R,
(CH₃O)₂(CH₃)Si(CH₂)₂C(H)(X)-CO₂R,
(CH₃O)₃Si(CH₂)₃C(H)(X)-CO₂R,
(CH₃O)₂(CH₃)Si(CH₂)₃C(H)(X)-CO₂R,
CH₃O)₃Si(CH₂)₄C(H)(X)-CO₂R,
(CH₃O)₂(CH₃)Si(CH₂)₄C(H)(X)-CO₂R,
(CH₃O)₃Si(CH₂)₉C(H)(X)-CO₂R,
(CH₃O)₂(CH₃)Si(CH₂)₉C(H)(X)-CO₂R,
(CH₃O)₃Si(CH₂)₃C(H)(X)-C₆H₅,
(CH₃O)₂(CH₃)Si(CH₂)₃C(H)(X)-C₆H₅,
(CH₃O)₃Si(CH₂)₄C(H)(X)-C₆H₅, and
(CH₃O)₂(CH₃)Si(CH₂)₄C(H)(X)-C₆H₅,
wherein X is chlorine, bromine, or iodine, R is an alkyl group having 1 to 20 carbon atoms, an aryl group having 6 to 20 carbon atoms, or an aralkyl group having 7 to 20 carbon atoms.

Examples of an organic halide or a halogenated sulfonyl compound having the above hydroxyl group are not particularly limited. Examples include:

HO-(CH₂)ₙ-OC(O)C(H) (R) (X)

wherein X is chlorine, bromine, or iodine, R is a hydrogen atom or an alkyl group having 1 to 20 carbon atoms, an aryl group having 6 to 20 carbon atoms, or an aralkyl group having 7 to 20 carbon atoms, and n is an integer from 1 to 20.

Examples of an organic halide or a halogenated sulfonyl compound having the above amino group are not particularly limited. Examples include:

H₂N-(CH₂)ₙ-OC(O) C (H) (R) (X)

wherein X is chlorine, bromine, or iodine, R is a hydrogen atom or an alkyl group having 1 to 20 carbon atoms, an aryl group having 6 to 20 carbon atoms, or an aralkyl group having 7 to 20 carbon atoms, and n is an integer from 1 to 20.

Examples of an organic halide or a halogenated sulfonyl compound having the above epoxy group are not particularly limited. Examples include: 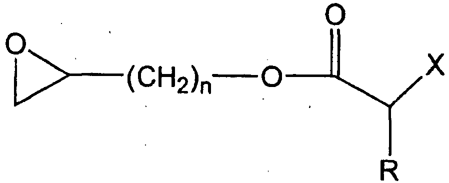 wherein X is chlorine, bromine, or iodine, R is a hydrogen atom or an alkyl group having 1 to 20 carbon atoms, an aryl group having 6 to 20 carbon atoms, or an aralkyl group having 7 to 20 carbon atoms, and n is an integer from 1 to 20.

In order to obtain component (A) of the present invention, i.e. a polymer having one terminal structure represented by the above general formula (1) per molecule, it is preferable to use an organic halide or a halogenated sulfonyl compound having one initiation point as described above as the initiator. In addition, in order to obtain the component (A) of the present invention, i.e. a polymer having two or more terminal structures represented by the above general formula (1) per molecule, it is preferable to use an organic halide or a halogenated sulfonyl compound having two or more initiation points as the initiator. Specific examples include:
o,m,p-X-CH₂-C₆H₄-CH₂-X 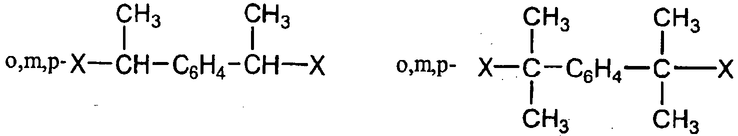 wherein C₆H₄ represents a phenylene group; and X represents chlorine, bromine, or iodine, 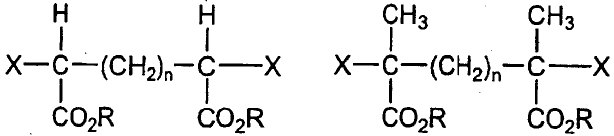 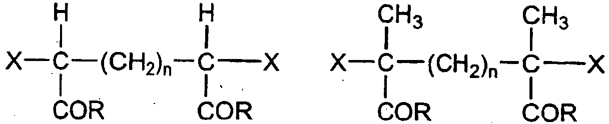 wherein R represents an alkyl group having 1 to 20 carbon atoms, an aryl group having 6 to 20 carbon atoms, or an aralkyl group having 7 to 20 carbon atoms; n represents an integer from 0 to 20; and X represents chlorine, bromine, or iodine, 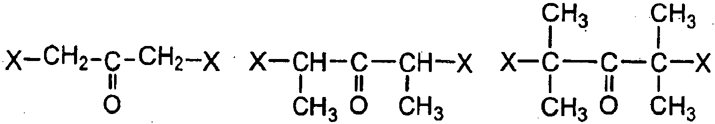 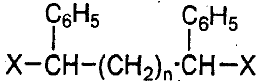 wherein X represents chlorine, bromine, or iodine; and n represents an integer from 0 to 20. 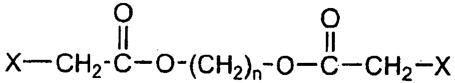 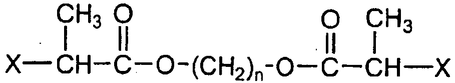 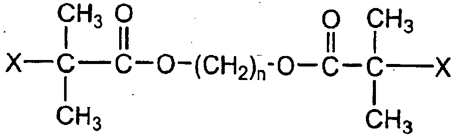
wherein n represents an integer from 1 to 20; and X represents chlorine, bromine, or iodine, 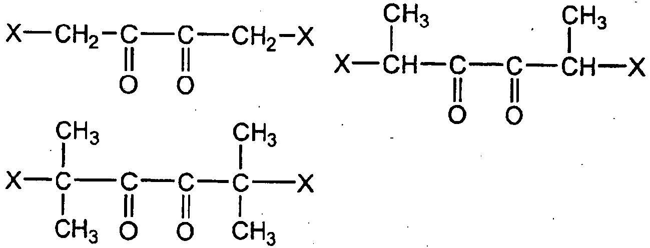 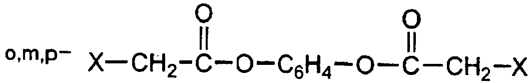 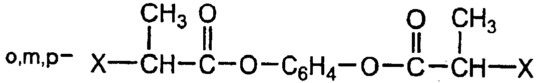 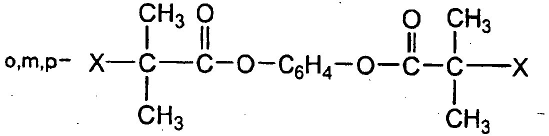
o,m,p- X-SO₂-C₆H₄-SO₂-X
wherein X represents chlorine, bromine, or iodine.

The vinyl monomer used in this polymerization is not particularly limited, and any of those already exemplified can be suitably used.

The transition metal complex used as the polymerization catalyst is not particularly limited. A metal complex having an element from the 7th, 8th, 9th, 10th, or 11th group of the periodic table as the central metal is preferable. A complex of zero-valent copper, monovalent copper, divalent ruthenium, divalent iron or divalent nickel is further preferable, and a copper complex is particularly preferable. Specific examples of a monovalent copper compound include, for example, cuprous chloride, cuprous bromide, cuprous iodide, cuprous cyanide, cuprous oxide, and cuprous perchlorate. In the case of using a copper compound, a ligand including 2,2'-bipyridyl and a derivative thereof, 1,10-phenanthroline and a derivative thereof, or a polyamine such as tetramethylethylenediamine, pentamethyldiethylenetriamine, and hexamethyltris(2-aminoethyl)amine can be added to enhance catalytic activity. Tris-triphenylphosphine complex of ruthenium dichloride (RuCl₂(PPh₃)₃) is also a suitable catalyst. In the case of using a ruthenium compound as the catalyst, aluminum alkoxide is added as an activator. In addition, bistriphenylphosphine complex of divalent iron (FeCl₂(PPh₃)₂), bistriphenylphosphine complex of divalent nickel (NiCl₂(PPh₃)₂), and bistributylphosphine complex of divalent nickel (NiBr₂(PBu₃)₂) are also suitable as a catalyst.

Polymerization can be carried out without solvents or in a variety of solvents. A solvent which can be used include a hydrocarbon solvent such as benzene and toluene; an ether solvent such as diethyl ether and tetrahydrofuran; a halogenated hydrocarbon solvent such as methylene chloride and chloroform; a ketone solvent such as acetone, methylethyl ketone and methylisobutyl ketone; an alcohol solvent such as methanol, ethanol, propanol, isopropanol, n-butyl alcohol, and tert-butyl alcohol; a nitrile solvent such as acetonitrile, propionitrile, and benzonitrile; an ester solvent such as ethyl acetate and butyl acetate; a carbonate solvent such as ethylene carbonate and propylene carbonate. These can be used alone, or two or more can be mixed.

Further, polymerization can be carried out at a temperature in the range of from room temperature to 200°C, preferably from 50 to 150°C.

### <Functional Group>

The vinyl polymer of the present invention comprises at least one group represented by the general formula (1) at the molecular terminal:

CH₂=C(R^{a})-C(O)O- (1)

In the above formula, R^{a} represents a hydrogen atom or a monovalent organic group having 1 to 20 carbon atoms. The monovalent organic group having 1 to 20 carbon atoms is not particularly limited, and examples include a substituted or unsubstituted alkyl group having 1 to 20 (preferably 1 to 10) carbon atoms, a substituted or unsubstituted aryl group having 6 to 20 (preferably 6 to 10) carbon atoms, a substituted or unsubstituted aralkyl group having 7 to 20 (preferably 7 to 10) carbon atoms, and a nitrile group. Examples of a substituent include hydroxyl, halogen, carboxyl, ester, and ether groups. Preferable R^{a} is a hydrogen atom and a monovalent hydrocarbon group having 1 to 20 carbon atoms, more preferably hydrogen and methyl group.

The number of groups shown in the general formula (1) is sufficient when the vinyl polymer has at least one group per molecule on average. In view of the curing property of the composition, it is preferable that the vinyl polymer has more than one on average, more preferably 1.1 or more on average, further preferably 1.5 or more on average. It is also preferable that there are 5 or less groups at the most.

### <Introduction of Functional Group>

A method for producing polymer (I) is not particularly limited. This can be produced by for example producing a vinyl polymer having a reactive functional group by the aforementioned method, followed by converting the reactive functional group into a substituent having a (meth)acryloyl group.

Methods for introducing a terminal functional group into the polymer of the present invention will be described below.

A method for introducing a (meth)acryloyl group at the terminal of a vinyl polymer is not limited. Examples include the following methods.
(Introduction Method 1) A method by reacting a vinyl polymer having a halogen group at the terminal with a compound shown in the general formula (3):

M⁺⁻OC(O)C(R^{a})=CH₂ (3)

wherein R^{a} represents a hydrogen atom or a monovalent organic group having 1 to 20 carbon atoms, and M⁺ represents an alkali metal ion or quaternary ammonium ion.

A preferable vinyl polymer having a halogen group at the terminal is one that has a terminal structure represented by the general formula (2):

-C(R¹)(R²)(X) (2)

wherein R¹ and R² represent a group bonded to an ethylenically unsaturated group of the vinyl monomer, and X represents chlorine, bromine or iodine.
(Introduction Method 2) A method by reacting a vinyl polymer having a hydroxyl group at the terminal with a compound shown in the general formula (4):

X¹C(O)C(R^{a})=CH₂ (4)

wherein R^{a} represents a hydrogen atom or a monovalent organic group having 1 to 20 carbon atoms, and X¹ represents chlorine, bromine or a hydroxyl group.
(Introduction Method 3) A method by reacting a vinyl polymer having a hydroxyl group at the terminal with a diisocyanate compound, followed by reacting the remaining isocyanate group with a compound shown in the general formula (5):

HO-R¹-OC(O)C(R^{a})=CH₂ (5)

wherein R^{a} represents a hydrogen atom or a monovalent organic group having 1 to 20 carbon atoms, and R' represents a divalent organic group having 2 to 20 carbon atoms.

Each of these methods will be described in detail below.

### <Introduction Method 1>

Introduction method 1 is a method by reacting a vinyl polymer having a halogen group at the terminal with a compound shown in the general formula (3):

M⁺⁻OC(O)C(R^{a})=CH₂ (3)

wherein R^{a} represents a hydrogen atom or a monovalent organic group having 1 to 20 carbon atoms, and M⁺ represents an alkali metal ion or quaternary ammonium ion.

A preferable vinyl polymer having a halogen group at the terminal is not particularly limited. Those having a terminal structure represented by the general formula (2) are preferable:

-C(R¹) (R²) (X) (2)

wherein R¹ and R² represent a group bonded to an ethylenically unsaturated group of the vinyl monomer, and X represents chlorine, bromine or iodine.

A vinyl polymer having a terminal structure represented by the general formula (2) is produced either by the aforementioned method of polymerizing a vinyl monomer using an organic halide or a halogenated sulfonyl compound as the initiator and a transition metal complex as the catalyst, or by the method of polymerizing a vinyl monomer using a halogen compound as the chain transfer agent, preferably by the former.

A compound represented by the general formula (3) is not particularly limited, provided that R^{a} is the same as in the above general formula (1). Specific examples include, for example, -H, -CH₃, -CH₂CH₃, -(CH₂)ₙCH₃, wherein n represents an integer from 2 to 19), -C₆H₅, -CH₂OH, and - CN, preferably -H and -CH₃.

M⁺ is a counter cation to the oxyanion. Types of M⁺ include an alkali metal ion, in particular lithium, sodium, potassium, and quaternary ammonium ions. Quaternary ammonium ion includes tetramethyl ammonium, tetraethyl ammonium, tetrabenzyl ammonium, trimethyl dodecyl ammonium, tetrabutyl ammonium and dimethylpiperidinium ions, preferably sodium and potassium ions. The amount of the oxyanion of the general formula (3) used is preferably from 1 to 5 equivalents, further preferably 1.0 to 1.2 equivalents to the halogen terminal of the general formula (2). A preferable solvent in which to carry out this reaction is a polar solvent since this is a nucleophilic substitution reaction, although it is not particularly limited. Examples of those used include tetrahydrofuran, dioxane, diethyl ether, acetone, dimethyl sulfoxide, dimethylformamide, dimethylacetamide, hexamethyl phosphoric triamide, and acetonitrile. The temperature at which the reaction is carried out is not limited, although it is generally from 0 to 150°C, more preferably from 10 to 100°C.

### <Introduction Method 2>

Introduction method 2 is a method by reacting a vinyl polymer having a hydroxyl group at the terminal with a compound shown in the general formula (4):

X¹C(O)C(R^{a})=CH₂ (4)

wherein R^{a} represents a hydrogen atom or a monovalent organic group having 1 to 20 carbon atoms, and X¹ represents chlorine, bromine or a hydroxyl group.

A compound represented by the general formula (4) is not particularly limited, provided that R^{a} is the same as in the above general formula (1). Specific examples include, for example, -H, -CH₃, -CH₂CH₃, -(CH₂)ₙCH₃, wherein n represents an integer from 2 to 19, -C₆H₅, -CH₂OH, and - CN, preferably -H and -CH₃.

A vinyl polymer having a hydroxyl group at the terminal is produced by the aforementioned method of polymerizing a vinyl monomer using an organic halide or a halogenated sulfonyl compound as the initiator and a transition metal complex as the catalyst, or by the method of polymerizing a vinyl monomer using a compound having a hydroxyl group as the chain transfer agent, preferably by the former. A method of producing a vinyl polymer having a hydroxyl group at the terminal by these methods is not limited. Examples include the following methods.
(a) A method in which when synthesizing a vinyl polymer by living radical polymerization, a compound having both of polymerizable alkenyl and hydroxyl groups in one molecule such as those shown in the general formula 10 below is allowed to be reacted as the second monomer:

   H₂C=C(R¹³)-R¹⁴-R¹⁵-OH (10)

   wherein R¹³ represents a hydrogen atom or a monovalent organic group having 1 to 20 carbon atoms, preferably a hydrogen atom or methyl group, R¹⁴ represents -C(O)O-(ester group), or o-, m- or p-phenylene group, R¹⁵ represent a direct bond, or a divalent organic group having 1 to 20 carbon atoms which may comprise one or more ether bond(s), when R¹⁴ is an ester group, the compound is a (meth)acrylate compound, and when R¹⁴ is a phenylene group, the compound is a styrene compound.
   The timing for reacting a compound having both of polymerizable alkenyl and hydroxyl groups in one molecule is not limited. Especially when a rubber-like property is anticipated, it is preferable to allow the reaction of the compound as the second monomer to be carried out towards the end of the polymerization reaction or after the reaction of the first monomer.
(b) A method in which when a vinyl polymer is synthesized by living radical polymerization, a compound having a low-polymerizable alkenyl group and a hydroxyl group in one molecule is allowed to be reacted as the second monomer towards the end of the polymerization reaction or after the reaction of the first monomer.
   Examples of such a compound include, but are not particularly limited to, a compound shown in the general formula 11:

   H₂C=C(R¹³)-R¹⁶-OH (11)

   wherein R¹³ is as described above; and R¹⁶ represents a divalent organic group having 1 to 20 carbon atoms which may comprise one or more ether bond(s)).
   A compound as shown in the above general formula 11 is not particularly limited. An alkenyl alcohol such as 10-undecenol, 5-hexenol, and an allyl alcohol are preferable due to their availability.
(c) A method of introducing a hydroxyl group at the terminal, in which a halogen from a vinyl polymer having at least one carbon-halogen bond represented by the general formula 2 obtainable by atom transfer radical polymerization is hydrolyzed or reacted with a compound containing a hydroxyl group, using the method as disclosed in for example Japanese Patent Laid-Open No. 4-132706.
(d) A method of substituting a halogen by reacting a vinyl polymer having at least one carbon-halogen bond represented by the general formula 2 obtainable by atom transfer radical polymerization with a stabilized carbanion having a hydroxyl group represented by the general formula 12:

   M⁺C⁻(R¹⁷)(R¹⁸)-R¹⁶-OH (12)

   wherein R¹⁶ and M⁺ are as described above, R¹⁷ and R¹⁸ are both electron withdrawing groups which stabilizes the carbanion C⁻, or one is the above electron withdrawing group and the other is a hydrogen atom, or an alkyl group having 1 to 10 carbon atoms or a phenyl group, examples of the electron withdrawing group of R¹⁷ and R¹⁸ include -CO₂R (ester group), -C(O)R (keto group), -CON(R₂) (amide group), -COSR (thio ester group), -CN (nitrile group), and -NO₂ (nitro group), substituent R is an alkyl group having 1 to 20 carbon atoms, an aryl group having 6 to 20 carbon atoms or an aralkyl group having 7 to 20 carbon atoms, preferably an alkyl group having 1 to 10 carbon atoms or a phenyl group, and particularly preferable R¹⁷ and R¹⁸ are - CO₂R, -C(O)R and -CN.
(e) A method of applying a metal elemental such as zinc or an organic metal compound to a vinyl polymer having at least one carbon-halogen bond represented by the general formula 2 obtainable by atom transfer radical polymerization to prepare an enolate anion, and then reacting with an aldehyde or ketone.
(f) A method of substituting a halogen with a substituent comprising a hydroxyl group, in which a halogen at the polymer terminal, preferably a vinyl polymer having at least one halogen represented by the general formula 2 is reacted with an oxyanion comprising a hydroxyl group such as those shown in the general formula 13 below or a carboxylate anion comprising a hydroxyl group such as those shown in the general formula 14 below:

   HO-R¹⁶-O⁻M⁺ (13)

   wherein R¹⁶ and M⁺ are as described above, and

   HO-R¹⁶-C(O)O⁻M⁺ (14)

   wherein R¹⁶ and M⁺ are as described above.

According to the present invention, when a halogen is not directly involved in the method of introducing a hydroxyl group, for example as in methods (a) and (b), method (b) is further preferable because it can be controlled more easily.

In addition, as in methods (c) to (f), when a hydroxyl group is introduced by converting a halogen from a vinyl polymer having at least one carbon-halogen bond, method (f) is further preferable because it can be controlled more easily.

The amount of the compound represented by the general formula (4) used is preferably from 1 to 10 equivalents, more preferably from 1 to 5 equivalents, relative to the terminal hydroxyl group of the vinyl polymer. The reaction solvent is not particularly limited, although since this is a nucleophilic substitution reaction, a polar solvent, for example tetrahydrofuran, dioxane, diethyl ether, acetone, dimethyl sulfoxide, dimethylformamide, dimethylacetamide, hexamethyl phosphoric triamide, and acetonitrile are preferable. The reaction temperature is not particularly limited, although it is preferably from 0 to 150°C, more preferably from 10 to 100°C.

### <Introduction Method 3>

Introduction method 3 is a method by reacting a vinyl polymer having a hydroxyl group at the terminal with a diisocyanate compound, followed by reacting the remaining isocyanate group with a compound shown in the general formula (5):

HO-R¹-OC(O)C(R^{a})=CH₂ (5)

wherein R^{a} represents a hydrogen atom or a monovalent organic group having 1 to 20 carbon atoms, and R' represents a divalent organic group having 2 to 20 carbon atoms.

The compound represented by the general formula (5) is not particularly limited, provided that R^{a} is the same as in the above general formula (1). Specific examples include, for example, -H, -CH₃, -CH₂CH₃, (CH₂)ₙCH₃, wherein n represents an integer from 2 to 19, -C₆H₅, -CH₂OH, and - CN, preferably -H and -CH₃.

Examples of a divalent organic group having 2 to 20 carbon atoms of R' include, for example, an alkylene group having 2 to 20 carbon atoms (such as ethylene, propylene, and butylene groups), an arylene group having 6 to 20 carbon atoms, and an aralkylene group having 7 to 20 carbon atoms.

A particular compound includes 2-hydroxypropyl methacrylate.

The vinyl polymer having a hydroxyl group at the terminal is as described above.

The diisocyanate compound is not particularly limited. Any of those well known in the art can be used, including, for example, tolylene diisocyanate, 4,4'-diphenylmethane diisocyanate, hexamethylene diisocyanate, xylene diisocyanate, metaxylene diisocyanate, 1,5-naphthalene diisocyanate, hydrogenated diphenylmethane diisocyanate, hydrogenated tolylene diisocyanate, hydrogenated xylene diisocyanate, and isophorone diisocyanate. These may be used alone, or two or more can be used in combination. A block isocyanate may also be used.

In order to obtain a more superior weather resistance, it is preferable to use a diisocyanate compound without any aromatic ring such as hexamethylene diisocyanate and hydrogenated diphenylmethane diisocyanate.

The amount of the diisocyanate compound used is preferably from 1 to 10 equivalents, more preferably from 1 to 5 equivalents, relative to the terminal hydroxyl group of the vinyl polymer. The reaction solvent is not particularly limited, although an aprotic solvent is preferable. The reaction temperature is not particularly limited, although it is preferably from 0 to 250°C, more preferably from 20 to 200°C.

The amount of the compound represented by the general formula (5) used is preferably from 1 to 10 equivalents, more preferably from 1 to 5 equivalents, relative to the remaining isocyanate group. The reaction solvent is not particularly limited, although an aprotic solvent is preferable. The reaction temperature is not particularly limited, although it is preferably from 0 to 250°C, more preferably from 20 to 200°C.

### <<(B) Monoacrylate Phenolic Antioxidant>>

The component (B), i.e. a monoacrylate phenolic antioxidant is not particularly limited, so long as it is a compound having a monoacrylate structure and a phenol structure. 2-t-butyl-6-(3-t-butyl-2-hydroxy-5-methylbenzyl)-4-methylphenyl acrylate (product name SUMILIZER GM) and 2,4-di-t-amyl-6-[1-(3,5-di-t-amyl-2-hydroxyphenyl)ethyl]phenyl acrylate (product name SUMILIZER GS) are preferable because the physical properties of the cured product can be controlled easily. The monoacrylate phenolic antioxidant may be used alone, or two or more may be used in combination.

The amount of the monoacrylate phenolic antioxidant used is not particularly limited. With the intent to have effect on the mechanical properties of the cured product, it is preferable to use 0.01 parts by weight or more, more preferably 0.05 parts by weight or more, relative to 100 parts by weight of the vinyl polymer (I). Moreover, it is preferably 5.0 parts by weight or less, more preferably 3.0 parts by weight or less, further preferably 2.0 parts by weight or less.

### <<(C) Polymerization Initiator>>

### <Curing Method>

The curable composition of the present invention is not particularly limited, although it is preferable to carry out the curing by an active energy beam such as UV and electron beam or by heat. Depending on each method of curing, a suitable compound is used as a polymerization initiator (C).

### <Curing by Active Energy Beam>

When curing is carried out by an active energy beam, it is preferable to include a photopolymerization initiator.

The photopolymerization initiator is not particularly limited, although radical or anion photopolymerization initiators are preferable, and a radical photopolymerization initiator is particularly preferable. Examples include acetophenone, 2,2-diethoxyacetophenone, propiophenone, benzophenone, xanthol, fluorein, benzaldehyde, anthraquinone, triphenylamine, carbazole, 3-methylacetophenone, 4-methylacetophenone, 3-pentylacetophenone, 4- methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin methyl ether, benzoin butyl ether, bis(4-dimethylaminophenyl)ketone, benzyl methoxy ketal, and 2-chlorothioxanthone. These initiators may be used alone or in combination with another compound. In particular, the combination includes a combination with an amine such as diethanolmethylamine, dimethylethanolamine, and triethanolamine, further a combination in which an iodonium salt such as diphenyliodonium chloride is added to the above combination, and a combination with a dye such as Methylene Blue and an amine.

A near-infrared light absorptive cation dye may be used as the near-infrared photopolymerization initiator. As a near-infrared light absorptive cation dye, those excited by photoenergy in the range of from 650 to 1500 nm, for example a near-infrared light absorptive cation dyeborate anion complex disclosed in for example Japanese Patent Laid-Open No. 3-111402, Japanese Patent Laid-Open No. 5-194619 are preferably used. It is further preferable to use the dye in combination with a boric sensitizer.

The amount of the photopolymerization initiator added is not particularly limited because it only needs to be enough to slightly photofunctionalize the system. It is preferable to add from 0.001 to 100 parts by weight, more preferably 0.01 parts by weight or more, further preferably 0.1 parts by weight or more, relative to 100 parts by weight of the vinyl polymer (I). More preferably, it is 50 parts by weight or less, and further preferably 30 parts by weight or less.

The source of the active energy beam is not particularly limited. Depending on the properties of the photopolymerization initiator, the source includes irradiation of photo and electron beams by for example a high pressure mercury lamp, a low pressure mercury lamp, an electron beam irradiation equipment, a halogen lamp, a light emitting diode, and a semiconductor laser.

### <Curing by Heat>

When curing is carried out by heat, it is preferable to include a thermal polymerization initiator.

The thermal polymerization initiator is not particularly limited. These include an azo initiator, a peroxide, a persulfate, and a redox initiator.

Suitable azo initiators include, but are not limited to, 2,2'-azobis(4-methoxy-2,4-dimethylvaleronitrile) (VAZO 33), 2,2'-azobis(2-amidinopropane) dihydrochloride (VAZO 50), 2,2'-azobis(2,4-dimethylvaleronitrile) (VAZO 52), 2,2'-azobis(isobutyronitrile) (VAZO 64), 2,2'-azobis-2-methylbutyronitrile (VAZO 67), 1,1-azobis(1-cyclohexanecarbonitrile) (VAZO 88) (all of which are available from DuPont Chemical), 2,2'-azobis(2-cyclopropylpropionitrile), and 2,2'-azobis(methyl isobutyrate) (V-601) (available from WAKO PURE CHEMICAL INDUSTRIES, LTD.).

Suitable peroxide initiators include, but are not limited to, benzoyl peroxide, acetyl peroxide, lauroyl peroxide, decanoyl peroxide, dicetyl peroxydicarbonate, di(4-t-butylcyclohexyl)peroxydicarbonate (Perkadox 16S) (available from Akzo Nobel), di(2-ethylhexyl)peroxydicarbonate, t-butyl peroxypivalate (Lupersol 11) (available from Elf Atochem), t-butyl peroxy-2-ethylhexanoate (Trigonox 21-C50) (available from Akzo Nobel), and dicumyl peroxide.

Suitable persulfate initiators include, but are not limited to, potassium persulfate, sodium persulfate, and ammonium persulfate.

Suitable redox (oxidation-reduction) initiators include, but are not limited to, a combination of the above persulfate initiator and a reducing agent such as sodium metahydrogensulfite and sodium hydrogensulfite; a system based on an organic peroxide and a tertiary amine, for example a system based on benzoyl peroxide and dimethylaniline; and a system based on an organic hydroperoxide and a transition metal, for example a system based on cumene hydroperoxide and cobalt naphthate.

Other initiators include, but are not limited to, pinacol such as tetraphenyl 1,1,2,2-ethanediol.

Preferable thermal polymerization initiators are those selected from the group consisting of an azo initiator and a peroxide initiator. 2,2'-azobis(methyl isobutyrate), t-butyl peroxypivalate, and di(4-t-butylcyclohexyl)peroxydicarbonate, and a mixture thereof are further preferable.

The thermal polymerization initiator used in the present invention is present in an amount effective as a catalyst. The preferable amount is, but is not limited to, typically from 0.01 to 50 parts by weight, more preferably 0.025 parts by weight or more, further preferably 0.05 parts by weight or more, more preferably 20 parts by weight or less, further preferably 10 parts by weight or less, relative to 100 parts by weight of the vinyl polymer (I). When a mixture of initiators is used, the total amount of the initiator mixture is an amount used as though only one initiator was used.

The condition for curing by heat is not particularly limited. The temperature for curing will vary depending on for example the thermal polymerization initiator and polymer (I) used, and the compound added. The preferable temperature is in the range of from 50°C to 250°C, more preferably in the range of from 70°C to 200°C. The time for curing will vary depending on for example the polymerization initiator, the monomer, and the solvent used and the reaction temperature. The typical time for curing is in the range of from 1 minute to 24 hours. «(D) Reinforcing Silica»

The composition of the present invention may further comprise a reinforcing silica (D).

Examples of a reinforcing silica component (D) include, for example fumed silica, precipitated silica, crystalline silica, fused silica, dolomite, silicic acid anhydride, and hydrous silicic acid. Those with a particle size of 50 µm or less and a specific surface area of 80 m²/g or more are particularly preferable in view of reinforcing effect. Among these, an ultrafine silica powder having a specific surface area (by BET adsorption) of 50 m²/g or more, typically from 50 to 400 m²/g, and preferably from about 100 to 300 m²/g is preferable. In addition, a surface-treated silica, for example those surface-treated with a silicon compound such as organosilane, organosilazane, and diorganocyclopolysiloxane are further preferable in that they tend to show fluidity suitable for molding. More specific examples of a reinforcing silica include, but are not particularly limited to, a fumed silica, e.g. AEROSIL from NIPPON AEROSIL CO., LTD. and a precipitated silica, e.g. NIPSIL from NIPPON SILICA INDUSTRIAL CO., LTD.

The amount of the reinforcing silica added is not particularly limited, but it is preferable to use from 0.1 to 100 parts by weight, preferably from 0.5 to 80 parts by weight, in particular from 1 to 50 parts by weight, relative to 100 parts by weight of the vinyl polymer (I). When the amount incorporated is less than 0.1 parts by weight, the effect of improving reinforcement may not be sufficient, and when it is greater than 100 parts by weight, the workability of the curable composition may decrease. Further, the reinforcing silica of the present invention may be used alone or in combination of two or more.

### <<Curable Composition>>

Various additives may be incorporated into the curable composition of the present invention as necessary to regulate physical property. For example, a fire retardant, an antioxidant, filler, plasticizer, a hardness regulator, an agent for regulating physical properties, an agent for imparting adhesion, a storage stability modifier, a solvent, a radical inhibitor, a metal deactivator, an antiozonant, a phosphorus peroxide-decomposing agent, a lubricant, a pigment, a foaming agent, and a light-curing resin may be incorporated. These various additives may be used alone or in combination of two or more.

The curable composition of the present invention comprises a monoacrylate phenolic antioxidant component (B) as an essential component. The component (B) is used for controlling polymerization when a cured product is produced. Conventionally well known antioxidant, ultraviolet absorber, or light stabilizer etc. can also be used as appropriate with the intent to improve durability after curing.

### <Filler>

In addition to the reinforcing silica component (D), various fillers may be used as necessary in the curable composition of the present invention. Examples of a filler include, but are not limited to, a reinforcing filler such as wood flour, pulp, cotton chip, asbestos, glass fiber, carbon fiber, mica, walnut coat powder, chaff powder, graphite, diatomaceous earth, clay, and carbon black; a filler such as heavy calcium carbonate, colloidal calcium carbonate, magnesium carbonate, diatomaceous earth, calcined clay, clay, talc, titanium oxide, bentonite, organic bentonite, ferric oxide, colcothar, fine aluminum powder, flint powder, zinc oxide, active zinc oxide, zinc powder, zinc carbonate and Shirasu balloon; a fiber filler such as asbestos, glass fiber and glass filament, carbon fiber, Kevler fiber, and polyethylene fiber.

Among these fillers, carbon black, calcium carbonate, titanium oxide, and talc for example are preferable.

In particular, when a cured product with high strength is needed to be obtained using these fillers, a filler selected mainly from for example carbon black, surface-treated fine calcium carbonate, crystalline silica, fused silica, calcined clay, clay and active zinc oxide can be added.

Moreover, when a cured product with low strength and high elongation is needed to be obtained, a filler selected mainly from for example titanium oxide, calcium carbonate, talc, ferric oxide, zinc oxide and Shirasu balloon can be added. In general, when the specific surface area of calcium carbonate is small, the effect of improving the breaking strength, breaking elongation, adhesion and weather-resistant adhesion of the cured product may not be sufficient. As the value of specific surface area increases, the effect of improving the breaking strength, breaking elongation, adhesion and weather-resistant adhesion of the cured product will increase.

In addition, it is preferable that calcium carbonate is surface-treated with a surface-treating agent. When a surface-treated calcium carbonate is used, it seems that the workability of the composition of the present invention is improved, and the effect of improving the adhesion and weather-resistant adhesion of the curable composition is greater, compared to using calcium carbonate without surface treatment. Examples of the surface-treating agent used include an organic compound such as fatty acid, fatty acid soap, fatty acid ester or various surfactants, and various coupling agents such as silane coupling agent and titanate coupling agent. Specific examples include, but are not limited to, a fatty acid such as caproic acid, caprylic acid, pelargonic acid, capric acid, undecanoic acid, lauric acid, myristic acid, palmitic acid, stearic acid, behenic acid, and oleic acid; a salt of these fatty acids such as sodium and potassium salts; and an alkyl ester of these fatty acids. Specific examples of a surfactant include a sulfate ester anionic surfactant such as for example polyoxyethylene alkyl ether sulfate ester, long chain alcohol sulfate ester, and sodium and potassium salts thereof; and a sulfonate anionic surfactant such as for example alkylbenzene sulfonate, alkyl naphthalene sulfonate, paraffin sulfonate, α-olefin sulfonate, alkyl sulfosuccinate, and sodium and potassium salts thereof. The amount of the surface-treating agent used for treatment is preferably in the range of from 0.1 to 20% by weight, more preferably in the range of from 1 to 5% by weight of calcium carbonate. When the amount is less than 0.1% by weight, the effect of improving the workability, adhesion and weather-resistant adhesion may not be sufficient, and when the amount is greater than 20% by weight, the storage stability of the curable composition may decrease.

Although it is not particularly limited, in the case of using calcium carbonate, if the effect of improving for example the thixotropy of the formulation or the strength at break, the elongation at break, adhesion and weather-resistant adhesion of the cured product is particularly expected, it is preferable to use a colloidal calcium carbonate.

On the other hand, heavy calcium carbonate may be added with the intent to for example viscosity-reducing or expanding the formulation and cost reduction. When heavy calcium carbonate is used, those shown below can be used as necessary.

Heavy calcium carbonate is a mechanically ground and processed natural chalk (chalk), marble, limestone, etc. There are dry and wet methods for grinding. The product from a wet grinding method is often not preferable, because it often impairs the storage stability of the curable composition of the present invention. Heavy calcium carbonate is made into products of various average particle sizes through sorting. Although it is not particularly limited, if the effect of improving the breaking strength, breaking elongation, adhesion and weather-resistant adhesion of the cured product is expected, it is preferable to use those having a specific surface area of between 1.5 m²/g or more and 50 m²/g or less, further preferably 2 m²/g or more and 50 m²/g or less, more preferably 2.4 m²/g or more and 50 m²/g or less, and particularly preferably 3 m²/g or more and 50 m²/g or less. When the specific surface area is less than 1.5 m²/g, its effect of improving may not be sufficient. Needless to say, this is not always the case when the objective is merely to for example lower the viscosity or to expand the formulation.

The value of specific surface area is a value measured by the air permeability method according to JIS K 5101 (a method of calculating the specific surface area from permeability of air against packed powder layer). It is preferable to use the specific surface area measurement instrument SS-100 from Shimadzu Corporation as the measuring device.

These fillers may be used alone or two or more may be used, according to the objective or as necessary. Although it is not particularly limited, for example, if heavy calcium carbonate having a specific surface area of 1.5 m²/g or more and a colloidal calcium carbonate are used in combination as necessary, the rise in the viscosity of the formulation can be suppressed at a moderate level, and the effect of improving the breaking strength, breaking elongation, adhesion and weather-resistant adhesion of the cured product can be greatly anticipated.

When a filler is used, the amount of the filler added is preferably used in the range of from 5 to 1000 parts by weight, more preferably in the range of from 40 to 300 parts by weight, and particularly preferably in the range of from 20 to 500 parts by weight, relative to 100 parts by weight of the vinyl polymer (I). When the amount incorporated is less than 5 parts by weight, the effect of improving the breaking strength, breaking elongation, adhesion and weather-resistant adhesion of the cured product may not be sufficient, and when the amount is greater than 1000 parts by weight, the workability of the curable composition may decrease. The filler may be used alone or in combination of two or more.

### <Microballoon>

In addition, a microballoon may also be used in combination with these reinforcing fillers with the objective of providing lightening and cost reduction without great deterioration in physical property.

Examples of such a microballoon (hereinafter referred to as balloon) include, but are not particularly limited to, a hollow body composed of a material of an inorganic or organic matter having a diameter of 1 mm or less, preferably 500 µm or less, further preferably 200 µm or less, as described in "Research and Development of Fillers" (CMC). In particular, it is preferable to use a micro-hollow body having an absolute specific gravity of 1.0 g/cm³ or less, and it is further preferable to use a micro-hollow body of 0.5 g/cm³ or less.

Examples of the inorganic balloon include silicate and non-silicate balloons. A silicate balloon includes for example Shirasu balloon, perlite, glass balloon, silica balloon, and fly ash balloon, and a non-silicate balloon includes for example alumina balloon, zirconia balloon, and carbon balloon. Specific examples of these inorganic balloons include WINLITE from THE IDICHI CHEMICAL COMPANY OF JAPAN and SANKILITE from SANKI ENGINEERING CO., LTD. as a Shirasu balloon; CALLOON from NIPPON SHEET GLASS CO., LTD., SELSTAR Z-28 from SUMITOMO 3M LTD., MICRO BALLOON from EMERSON & CUMING, CERAMIC GLASSMODULES from PITTSBURGH CORNING, and GLASS BUBBLES from 3M as a glass balloon; Q-CEL from ASAHI GLASS CO., LTD. and E-SPHERES from TAIHEIYO CEMENT CORPORATION as a silica balloon; CEROSPHERES from PFAMARKETING and FILLITE from FILLITE U.S.A. as a fly ash balloon; BW from SHOWA DENKO K. K. as an alumina balloon; HOLLOW ZIRCONIUM SPHEES from ZIRCOA as a zirconia balloon; KUREKASPHERE from KUREHA CHEMICAL INDUSTRIES CO., LTD. and CARBOSPHERE from GENERAL TECHNOLOGIES as a carbon balloon; all of which are commercially available.

Examples of the organic balloon can include a thermosetting resin balloon and a thermoplastic resin balloon. A thermosetting balloon includes phenol balloon, epoxy balloon, and urea balloon, and a thermoplastic balloon includes saran balloon, polystyrene balloon, polymethacrylate balloon, polyvinyl alcohol balloon, and styrene-acrylic balloon. Crosslinked thermoplastic resin balloon can also be used. A balloon herein may also be a foamed balloon, wherein a formulation comprising a foaming agent may be allowed to foam to provide a balloon.

Specific examples of these organic balloons include UCAR and PHENOLIC MICROBALLOONS from UNION CARBIDE CORPORATION as a phenol balloon; ECCOSPHERES from EMERSON & CUMING as an epoxy balloon; ECCOSPHERES VF-O from EMERSON & CUMING as an urea balloon; SARAN MICROSPHERES from DOW CHEMICAL, EXPANCEL from NIPPON FILAMENT, and MATSUMOTO MICROSPHERE from MATSUMOTO YUSHI-SEIYAKU CO., LTD. as a saran balloon; DYLITE EXPANDABLE POLYSTYRENE from ARCO POLYMERS and EXPANDABLE POLYSTYRENE BEADS from BASF WYANDOTE as a polystyrene balloon; SX863 (P) from JAPAN SYNTHETIC RUBBER CO., LTD. as a crosslinked styrene-acrylate balloon; all of which are commercially available.

The above balloons may be used alone, or two or more may be used in combination. In addition, these balloons that were surface-treated with for example a fatty acid, a fatty acid ester, a rosin, a rosin acid lignin, a silane coupling agent, a titanium coupling agent, an aluminum coupling agent, or a polypropylene glycol to improve the dispersibility and workability of the formulation can also be used. These balloons are used for lightening and cost reduction without losing the physical properties of the cured formulation such as flexibility, elongation and strength.

The amount of the balloon incorporated is not particularly limited. It can be used preferably in the range of from 0.1 to 50 parts by weight, further preferably from 0.1 to 30 parts by weight, relative to 100 parts by weight of the vinyl polymer (I). When this amount is less than 0.1 parts by weight, the effect of lightening is small, and when the amount is 50 parts by weight or more, deterioration in the mechanical properties of the cured formulation such as tensile strength may be observed. In addition, when the specific gravity of the balloon is 0.1 or more, the amount is preferably from 3 to 50 parts by weight, further preferably from 5 to 30 parts by weight.

### <Plasticizer>

A plasticizer that can be incorporated is not particularly limited. Examples include, depending on the objective such as regulation of a physical property or adjustment of a characteristic, a phthalate ester such as dibutyl phthalate, diheptyl phthalate, di(2-ethylhexyl)phthalate, and butyl benzyl phthalate; a nonaromatic dibasic acid ester such as dioctyl adipate, dioctyl sebacate, dibutyl sebacate, and isodecyl succinate; an aliphatic ester such as butyl oleate and methyl acetyl ricinolate; an ester of polyalkylene glycol such as diethylene glycol dibenzoate, triethylene glycol dibenzoate, and pentaerythritol ester; a phosphoric ester such as tricresyl phosphate and tributyl phosphate; a trimellitic ester; a polystyrene such as polystyrene and poly-α-methylstyrene; polybutadiene, polybutene, polyisobutylene, butadiene-acrylonitrile, and polychloroprene; a chlorinated paraffin; a hydrocarbon oil such as alkyl diphenyl and partially hydrogenated terphenyl; a process oil; a polyether, for example a polyether polyol such as polyethylene glycol, polypropylene glycol, and polytetramethylene glycol, and a derivative thereof wherein a hydroxyl group from these polyether polyols is converted into for example an ester or ether group; an epoxy plasticizer such as epoxidated soybean oil and benzyl epoxystearate; a polyester plasticizer obtained from a dibasic acid such as sebacic acid, adipic acid, azelaic acid, and phthalic acid, and a dihydric alcohol such as ethylene glycol, diethylene glycol, triethylene glycol, propylene glycol, and dipropylene glycol; a vinyl polymer obtained by polymerizing a vinyl monomer including an acrylic plasticizer using various methods.

By adding a polymeric plasticizer, which is a polymer having a number average molecular weight of from 500 to 15000, the viscosity of the curable composition and the mechanical properties of the cured product obtained by curing the composition, such as tensile strength and elongation, can be regulated. In addition, as compared to using a low molecular weight plasticizer which is a plasticizer that do not contain any polymer component in the molecule, the initial physical property can be retained for a longer period of time, and the drying property (also called the coatability) upon coating of an alkyd paint to the cured product can be improved. Although it is not limited, this polymeric plasticizer may be with or without a functional group.

The number average molecular weight of the polymeric plasticizer is from 500 to 15000 as stated above, preferably from 800 to 10000, and more preferably from 1000 to 8000. When the molecular weight is too low, the plasticizer will run off over time by heat or rain. When this happens, the initial physical property cannot be retained for a long period of time, and alkyd coatability may not improve. When the molecular weight is too high, viscosity rises and workability is impaired.

Among these polymeric plasticizers, those compatible with a vinyl polymer are preferable. A vinyl polymer is preferable in view of compatibility, weather resistance, and heat resistance. Among vinyl polymers, a poly(meth)acrylate is preferable and a polyacrylate is further preferable. A method for synthesizing this polyacrylate includes, for example, those obtained by conventional solution polymerization and solventless polyacrylates. The latter acrylic plasticizer is more preferable for the objective of the present invention, because it does not use any solvents or chain transfer agents, but is produced by continuous high temperature polymerization method (USP 4414370, Japanese Patent Laid-Open No. 59-6207, Japanese Patent Publication No. 5-58005, Japanese Patent Laid-Open No. 1-313522, and USP 5010166). Examples of these include, but are not limited to, a series of UP products from TOAGOSEI CO., LTD. (see Industrial Materials (Kougyou Zairyou), October, 1999). Needless to say, living radical polymerization can also be mentioned as another method for synthesis. According to this method, this method is preferable because the molecular weight distribution of the polymer thereof is narrow and the viscosity is capable of being lowered. Moreover, although it is not limiting, atom transfer radical polymerization is more preferable.

The molecular weight distribution of the polymeric plasticizer is not particularly limited. However, it is preferable that the distribution is narrow, preferably less than 1.8, more preferably 1.7 or less, more preferably 1.6 or less, further preferably 1.5 or less, particularly preferably 1.4 or less, and most preferably 1.3 or less.

A plasticizer comprising the above polymeric plasticizer may be used alone or in combination of two or more, but it is not always necessary. Where necessary, a polymeric plasticizer may be used, and a low molecular weight plasticizer may also be used in combination so long as it is in the range that it does not have an adverse effect on the physical property.

These plasticizers can also be incorporated at the time of polymer production.

The amount of the plasticizer used is not limited. It is from 5 to 150 parts by weight, preferably from 10 to 120 parts by weight, further preferably from 20 to 100 parts by weight, relative to 100 parts by weight of the vinyl polymer (I). When the amount is less than 5 parts by weight, its effect as a plasticizer will not be expressed, and when the amount is greater than 150 parts by weight, the mechanical strength of the cured product will be insufficient.

### <Solvent>

Examples of a solvent that can be incorporated include an aromatic hydrocarbon solvent such as toluene and xylene; an ester solvent such as ethyl acetate, butyl acetate, amyl acetate, and cellosolve acetate; and a ketone solvent such as methylethyl ketone, methylisobutyl ketone, and diisobutyl ketone. These solvents may be used at the time of polymer production.

### <Agent for Imparting Adhesion>

When the curable composition of the present invention is used alone as a molding rubber, it is not particularly necessary to add an agent for imparting adhesion. However, if for example a two-color molding with a heterogeneous base material is necessary, an agent for imparting adhesion can be added to the extent that it does not significantly affect the physical property of the cured product obtained, and that it does not affect the metal mold release property of the advantage of the present invention. The agent for imparting adhesion which can be incorporated is not particularly limited, provided that it imparts adhesion to the curable composition. A crosslinkable silyl group-containing compound is preferable, and a silane coupling agent is further preferable. Specific examples include an alkylalkoxysilane such as methyltrimethoxysilane, dimethyldimethoxysilane, trimethylmethoxysilane, and n-propyltrimethoxysilane; an alkylisopropenoxysilane such as dimethyldiisopropenoxysilane and methyltriisopropenoxysilane; a vinyl unsaturated group-containing silane such as vinyltrimethoxysilane, vinyldimethylmethoxysilane, vinyltriethoxysilane, γ-(meth)acryloyloxypropylmethyldimethoxysilane, and γ-acryloyloxy propylmethyltriethoxysilane; a silicon varnish; and a polysiloxane.

Among these, a silane coupling agent comprising both an organic group having an atom other than carbon or hydrogen atoms in the molecule, such as epoxy, (meth)acrylic, isocyanate, isocyanurate, carbamate, amino, mercapto, and carboxyl groups and a crosslinkable silyl group is preferable. Specific examples include an isocyanate group-containing silane such as γ-isocyanatepropyltrimethoxysilane, γ-isocyanatepropyltriethoxysilane, γ-isocyanatepropylmethyldiethoxysilane, and γ-isocyanatepropylmethyldimethoxysilane as an isocyanate group-containing alkoxysilane; an isocyanurate silane such as tris(trimethoxysilyl)isocyanurate as an isocyanurate group-containing alkoxysilane; an amino group-containing silane such as γ-aminopropyltrimethoxysilane, γ-aminopropyltriethoxysilane,γ-aminopropylmethyldimethoxysilane, γ-aminopropylmethyldiethoxysilane, N-(β-aminoethyl)-γ-aminopropyltrimethoxysilane, N-(β-aminoethyl)-γ-aminopropylmethyldimethoxysilane, N-(β-aminoethyl)-γ-aminopropyltriethoxysilane, N-(β-aminoethyl)-γ-aminopropylmethyldiethoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane as an amino group-containing alkoxysilane; a mercapto group-containing silane such as γ-mercaptopropyltrimethoxysilane, γ-mercaptopropyltriethoxysilane, γ-mercaptopropylmethyldimethoxysilane, and γ-mercaptopropylmethyldiethoxysilane as a mercapto group-containing alkoxysilane; a carboxysilane such as β-carboxyethyltriethoxysilane, β-carboxyethylphenylbis(2-methoxyethoxy)silane, and N-β-(carboxymethyl)aminoethyl-γ-aminopropyltrimethoxysilane as a carboxyl group-containing alkoxysilane; a halogen-containing silane such as γ-chloropropyltrimethoxysilane as a halogen group-containing alkoxysilane.

In addition, a modified derivative thereof such as an amino-modified silyl polymer, a silylated amino polymer, an unsaturated amino silane complex, a phenylamino long chain alkyl silane, an aminosilylated silicon, and a silylated polyester can also be used as a silane coupling agent.

Further, among these, an alkoxysilane containing an epoxy group or a (meth)acrylic group in the molecule is more preferable in view of curing property and adhesion. More specific examples of these include γ-glycidoxypropylmethyldimethoxysilane, γ-glycidoxypropyltrimethoxysilane, γ-glycidoxypropyltriethoxysilane, β-(3,4-epoxycyclohexyl)ethyltrimethoxysilane, and β-(3,4-epoxycyclohexyl)ethyltriethoxysilane, γ-glycidoxypropylmethyldiisopropenoxysilane etc. as an epoxy group-containing alkoxysilane; γ-methacryloxypropyltrimethoxysilane, γ-methacryloxypropyltriethoxysilane, γ-acryloxypropyltrimethoxysilane, γ-acryloxypropyltriethoxysilane, methacryloxymethyltrimethoxysilane, methacryloxymethyltriethoxysilane, acryloxymethyltrimethoxysilane, acryloxymethyltriethoxysilane etc. as a (meth)acrylic group-containing alkoxysilane. These may be used alone or in combination of two or more.

A crosslinkable silyl group condensation catalyst can be used in combination with the above agent for imparting adhesion to further improve adhesion. Examples of a crosslinkable silyl group condensation catalyst include, for example, an organic tin compound such as dibutyltin dilaurate, dibutyltin diacetylacetonate, dibutyltin dimethoxide, and tin 2-ethylhexanoate; an organic aluminum compound such as aluminum acetylacetonate; an organic titanium compound such as tetraisopropoxy titanium and tetrabutoxy titanium.

Specific examples other than silane coupling agents include, but are not limited to, for example, an epoxy resin, a phenol resin, sulfur, an alkyl titanate, and an aromatic polyisocyanate.

The above agent for imparting adhesion is preferably incorporated in the amount of from 0.01 to 20 parts by weight, relative to 100 parts by weight of the vinyl polymer (I). When the amount is less than 0.01 parts by weight, the effect of improving adhesion is small, and when the amount is greater than 20 parts by weight, the physical property of the cured product is adversely affected. The amount is preferably from 0.1 to 10 parts by weight; further preferably from 0.5 to 5 parts by weight.

The above agent for imparting adhesion may be used alone, or two or more may be used in combination.

### <<Molding Property>>

According to the present invention, when the curable composition is allowed to flow, it is preferable to carry this out at a temperature, but are not limited to, between 10°C or more and less than 90°C, more preferably allowed to flow at a temperature from 20°C or more and less than 70°C.

Also according to the present invention, the curable composition can be allowed to flow at a temperature of between 10°C or more and less than 90°C, and at the same time to be carried out the curing reaction with flowing at 10°C or more. In other words, the curable composition of the present invention can also be used as a resin for injection molding (such as RIM and LIM).

### <<Molding Method>>

A molding method for employing the curable composition of the present invention as the molded product is not particularly limited, and commonly used various molding methods can be used. Examples include, for example, cast molding, compression molding, transfer molding, injection molding, extrusion molding, rotational molding, hollow molding, and heat molding. Injection molding is preferable particularly in view that automation and serialization is possible and that it is superior in productivity.

### <<Application>>

The curable composition of the present invention can be employed in various applications including, but not limited to, a material for electrical and electronic parts such as the back sealer of a solar battery, an electrical insulating material such as an insulating coating material for electric wire and cable, a coating material, a foam, an electrical and electronic potting material, a film, a gasket, a casting material, an artificial marble, various molding materials, and a rust proofing and waterproofing sealer for the edge (the cut edge) of a wire glass or shatterproof glass.

In addition, a molded product exhibiting rubber elasticity obtained from the curable composition of the present invention can be widely used, mainly on gaskets and packings. For example, in the automotive field, the composition can be used as a body part in a sealing material for maintaining airtightness, a glass vibration control material, and an auto body part vibration isolator, especially in a windseal gasket and a door glass gasket; as a chassis component in an engine and suspension rubber for vibration control and acoustic insulation, especially in an engine mount rubber; as an engine component, for example in a hose for cooling, fuel delivery, and exhaust gas control etc., a sealing material for engine oil, as well as in an exhaust gas cleaning device component and a brake component. In the consumer electronics field, the composition can be used as for example a packing, an O-ring, and a belt. Specific examples include an ornament for a lighting equipment; a waterproof packing; a vibration control rubber; an insect repellent packing; a vibration control and acoustic absorption material and air sealing material for a cleaner; a drip proof cover, a waterproof packing, a packing for heater component, a packing for electrode component, and a safety valve diaphragm for an electric water heater; a hose, a waterproof packing, and an electromagnetic valve for a sake warmer; a waterproof packing, a feed water tank packing, a water valve, a catch drain packing, a connection hose, a belt, a packing for insulated heater component, and a steam outlet sealing etc. for a steam oven/microwave and rice cooker; an oil packing, an 0-ring, a drain packing, a pressure pipe, a blower pipe, an air intake/outtake packing, a vibration control rubber, an oil filler opening packing, an oil gauge packing, an oil feed pipe, a diaphragm valve, and an air pipe etc. for a burning appliance; a speaker gasket, a speaker edge, a turntable sheet, a belt, and a pulley for an audio equipment. In the architecture field, the composition can be used in for example a structural gasket (zipper gasket), an air membrane structure roofing material, a waterproof material, a shaped sealing, a vibration isolator, an acoustic insulation, a setting block, and a sliding material. In the sports field, the composition can be used in for example an all weather pavement material and a gymnasium flooring etc. as a sports flooring; in a soling material and an insole material etc. as sports shoes; in a golf ball etc. as a ball for ballgames. In the vibration control rubber field, the composition can be used in for example a vibration control rubber for an automobile, a vibration control rubber for a railcar, a vibration control rubber for an aircraft, and a fender beam material. In the marine and civil engineering field, the composition can be used in for example a rubber expansion joint, a bearing, a waterstop, a waterproof sheet, a rubber dam, an elastic pavement, a vibration control pad, and a protective barrier etc. as a structural material; a rubber mold form, a rubber packer, a rubber skirt, a sponge mat, a mortar hose, and a mortar strainer etc. as a construction auxiliary material; a rubber sheet and an air hose etc. as a construction aid material; a rubber buoy and a wave absorbing material etc. as a safety precaution product; an oil fence, a silt fence, an antifouling material, a marine hose, a dredging hose, and a oil skimmer etc. as an environmental protection product. The composition can also be used in for example a rubber plate, a mat, and a foam plate.

### [Examples]

Specific Examples and Comparative Examples of the present invention will be described below. The present invention is not to be limited to the following Examples.

In the following Examples and Comparative Examples, "parts" and "%" represent "parts by weight" and "% by weight", respectively.

In the following Examples, "number average molecular weight" and "molecular weight distribution (the ratio of the weight average molecular weight to the number average molecular weight)" were calculated by a method based on a polystyrene standard sample using gel permeation chromatography (GPC). The GPC column used was a column packed with polystyrene crosslinking gel (shodex GPC K-804 from SHOWA DENKO K. K.), and the solvent used in GPC was chloroform.

### (Production Example 1) (Synthesis of acryloyl diterminal-poly(n-butyl acrylate/ethyl acrylate/2-methoxyethyl acrylate))

Using cuprous bromide as the catalyst, pentamethyldiethylenetriamine as the ligand, diethyl-2,5-dibromoadipate as the initiator, n-butyl acrylate/ethyl acrylate/2-methoxyethyl acrylate at a molar ratio of 25/46/29 was polymerized. Poly(n-butyl acrylate/ethyl acrylate/2-methoxyethyl acrylate) with a terminal bromine group having a number average molecular weight of 16500 and a molecular weight distribution of 1.13 was obtained.

Four hundred grams of this polymer was dissolved in N,N-dimethylacetamide (400 mL), 10.7 g of potassium acrylate was added, and the mixture was stirred with heating at 70°C for 6 hours under nitrogen atmosphere to obtain a mixture of poly(n-butyl acrylate/ethyl acrylate/2-methoxyethyl acrylate) with an acroyl terminal group (hereinafter referred to as copolymer [P1]). N,N-dimethylacetamide in the mixture was distilled off under reduced pressure, toluene was added to the residue, and the insoluble component was removed by filtration. The toluene in the filtrate was distilled off under reduced pressure, and copolymer [P1] was purified. The purified copolymer [P1] had a number average molecular weight of 16900, a molecular weight distribution of 1.14, and the number of average terminal acryloyl group was 1.8.

### (Example 1)

To 100 parts of copolymer [P1] obtained in Production Example 1, 10 parts of AEROSIL R974 (average size of primary particle 12 nm: available from NIPPON AEROSIL CO., LTD.) as a reinforcing silica, 0.2 parts of 2,2-diethoxyacetophenone (available from WAKO PURE CHEMICAL INDUSTRIES, LTD.) as a photopolymerization initiator, and 0.3 parts of SUMILIZER GS (2,4-di-t-amyl-6-[1-(3,5-di-t-amyl-2-hydroxyphenyl)ethyl]phenyl acrylate; available from SUMITOMO CHEMICAL CO., LTD.) as a monoacrylate phenolic antioxidant were combined, and the mixture was blended well using three paint rollers. The curable composition obtained as such was fully defoamed by an agitation defoaming apparatus, and then filled into a stainless steel mold, to obtain a thickness of about 2 mm. Ultraviolet irradiation was carried out with a high pressure mercury lamp so that the total amount of light would be 5000 mj/cm² to obtain the cured product. The mechanical strength of the cured product obtained was as follows: breaking elongation 190%, breaking strength 1.5 MPa.

### (Example 2)

To 100 parts of copolymer [P1] obtained in Production Example 1, 10 parts of AEROSIL R974 (average size of primary particle 12 nm: available from NIPPON AEROSIL CO., LTD.) as a reinforcing silica, 0.2 parts of 2,2-diethoxyacetophenone (available from WAKO PURE CHEMICAL INDUSTRIES, LTD.) as a photopolymerization initiator, and 0.2 parts of SUMILIZER GS (2,4-di-t-amyl-6-[1-(3,5-di-t-amyl-2-hydroxyphenyl)ethyl]phenyl acrylate; available from SUMITOMO CHEMICAL CO., LTD.) as a monoacrylate phenolic antioxidant were combined, and the mixture was blended well using a three arm paint roller. The curable composition obtained as such was fully defoamed by an agitation defoaming apparatus, and then poured into a stainless metal mold, to obtain a thickness of about 2 mm. Ultraviolet irradiation was carried out with a high pressure mercury lamp so that the total amount of light would be 5000 mj/cm² to obtain the cured product. The mechanical strength of the cured product obtained was as follows: breaking elongation 140%, breaking strength 1.1 MPa.

### (Comparative Example 1)

To 100 parts of copolymer [P1] obtained in Production Example 1, 10 parts of AEROSIL R974 (average size of primary particle 12 nm: available from NIPPON AEROSIL CO., LTD.) as a reinforcing silica, and 0.2 parts of 2,2-diethoxyacetophenone (available from WAKO PURE CHEMICAL INDUSTRIES, LTD.) as a photopolymerization initiator were combined, and the mixture was blended well using a three arm paint roller. The curable composition obtained as such was fully defoamed by an agitation defoaming apparatus, and then filled into a stainless metal mold, to obtain a thickness of about 2 mm. Ultraviolet irradiation was carried out with a high pressure mercury lamp so that the total amount of light would be 5000 mj/cm² to obtain the cured product. The mechanical strength of the cured product obtained was as follows: breaking elongation 100%, breaking strength 1.0 MPa. Elongation in particular was insufficient compared to Examples 1 and 2.

## Claims

1. A curable composition comprising:
(A) a vinyl polymer (I) comprising, at the molecular terminal, at least one group represented by the general formula (1):
CH₂=C (R^{a}) -C(O)O- (1)
wherein R^{a} represents a hydrogen atom or a monovalent organic group having 1 to 20 carbon atoms, and
(B) a monoacrylate phenolic antioxidant.

2. The curable composition according to claim 1, wherein the vinyl polymer (I) has a molecular weight distribution of less than 1.8.

3. The curable composition according to claims 1 or 2, wherein the vinyl polymer (I) has a main chain produced by polymerization using, as a main component, at least one monomer selected from the group consisting of a (meth)acrylic monomer, an acrylonitrile monomer, an aromatic vinyl monomer, a fluorine-containing vinyl monomer and a silicon-containing vinyl monomer.

4. The curable composition according to any one of claims 1 to 3, wherein the vinyl polymer (I) is a poly(meth)acrylate.

5. The curable composition according to any one of claims 1 to 4, wherein the vinyl polymer (I) is a polyacrylate.

6. The curable composition according to any one of claims 1 to 5, wherein the vinyl polymer (I) is an acrylic ester polymer.

7. The curable composition according to any one of claims 1 to 6, wherein the vinyl polymer (I) has a main chain produced by living radical polymerization.

8. The curable composition according to claim 7, wherein the living radical polymerization is atom transfer radical polymerization.

9. The curable composition according to claim 8, wherein the atom transfer radical polymerization uses, as a catalyst, a transition metal complex having an element from the 7th, 8th, 9th, 10th, or 11th group of the periodic table as a central metal.

10. The curable composition according to claim 9, wherein the metal complex used as a catalyst is a complex of a metal selected from the group consisting of copper, nickel, ruthenium and iron.

11. The curable composition according to claim 10, wherein the metal complex used as a catalyst is a copper complex.

12. The curable composition according to any one of claims 1 to 11, wherein the component (A) is a vinyl polymer obtained by the steps of:
(1) polymerizing a vinyl monomer by atom transfer radical polymerization to produce a vinyl polymer having a terminal structure represented by the general formula (2):
-C(R¹) (R²) (X) (2)
wherein R¹ and R² represent a group bonded to an ethylenically unsaturated group of the vinyl monomer, and X represents chlorine, bromine or iodine; and
(2) converting a terminal halogen of the polymer into a group represented by the general formula (1).

13. The curable composition according to any one of claims 1 to 12, wherein the component (A) is produced by the following step of:
reacting a vinyl polymer having a halogen group at the terminal with a compound represented by the general formula (3):
M⁺⁻OC(O)C(R^{a})=CH₂ (3)
wherein R^{a} represents a hydrogen atom or a monovalent organic group having 1 to 20 carbon atoms, and M⁺ represents an alkali metal ion or quaternary ammonium ion.

14. The curable composition according to claim 13, wherein the vinyl polymer having a halogen group at the terminal has a terminal structure represented by the general formula (2):
-C(R¹) (R²) (X) (2)
wherein R¹ and R² represent a group bonded to an ethylenically unsaturated group of the vinyl monomer, and X represents chlorine, bromine or iodine.

15. The curable composition according to any one of claims 1 to 12, wherein the component (A) is produced by the step of:
reacting a vinyl polymer having a hydroxyl group at the terminal with a compound represented by the general formula (4):
X¹C(O)C(R^{a})=CH₂ (4)
wherein R^{a} represents a hydrogen atom or a monovalent organic group having 1 to 20 carbon atoms, and X¹ represents chlorine, bromine or a hydroxyl group.

16. The curable composition according to any one of claims 1 to 12, wherein the component (A) is produced by the steps of:
(1) reacting a vinyl polymer having a hydroxyl group at the terminal with a diisocyanate compound; and
(2) reacting the remaining isocyanate group with a compound represented by the general formula (5):
HO-R'-OC(O)C(R^{a})=CH₂ (5)
wherein R^{a} represents a hydrogen atom or a monovalent organic group having 1 to 20 carbon atoms, and R' represents a divalent organic group having 2 to 20 carbon atoms.

17. The curable composition according to any one of claims 1 to 6, wherein the vinyl polymer (I) has a main chain produced by polymerizing a vinyl monomer using a chain transfer agent.

18. The curable composition according to any one of claims 1 to 17, wherein the vinyl polymer (I) has a number average molecular weight of 3000 or more.

19. The curable composition according to any one of claims 1 to 18, wherein the component (B) monoacrylate phenolic antioxidant is 2-t-butyl-6-(3-t-butyl-2-hydroxy-5-methylbenzyl)-4-methylphenyl acrylate and/or 2,4-di-t-amyl-6-[1-(3,5-di-t-amyl-2-hydroxyphenyl)ethyl]phenyl acrylate.

20. The curable composition according to any one of claims 1 to 19, further comprising (C) a polymerization initiator.

21. The curable composition according to claim 20, wherein the polymerization initiator (C) is a photopolymerization initiator.

22. The curable composition according to claim 21, wherein the photopolymerization initiator is a radical photopolymerization initiator.

23. The curable composition according to claim 20, wherein the polymerization initiator (C) is a thermal polymerization initiator.

24. The curable composition according to claim 23, wherein the thermal polymerization initiator is selected from the group consisting of an azo initiator, a peroxide, a persulfate, and a redox initiator.

25. A curable composition according to any one of claims 1 to 24, furthermore comprising reinforcing silica as an essential component(D).

26. The curable composition according to any one of claims 1 to 25, comprising from 0.01 to 5.0 parts by weight of the component (B) relative to 100 parts by weight of the component (A).

27. A method for improving mechanical properties of a cured product obtained from a curable composition comprising a step of adding (B) monoacrylate phenolic antioxidant to (A) a vinyl polymer having, at the molecular terminal, at least one group represented by the general formula (1):
CH₂=C(R^{a}) -C(O)O- (1)
wherein R^{a} represents a hydrogen atom or a monovalent organic group having 1 to 20 carbon atoms, in order to suppress polymerization reaction.

28. A cured product obtained from the curable composition according to any one of claims 1 to 26.

## Patentansprüche

1. Härtbare Zusammensetzung, umfassend:
(A) ein Vinylpolymer (I), umfassend wenigstens eine Gruppe an dem molekularen Ende, die durch die allgemeine Formel (1) dargestellt wird:
CH₂=C (R^{a}) -C (O) O- (1)
wobei R^{a} ein Wasserstoffatom oder eine einwertige organische Gruppe mit 1 bis 20 Kohlenstoffatomen darstellt, und
(B) ein Monoacrylatphenol-Antioxidationsmittel.

2. Härtbare Zusammensetzung nach Anspruch 1, wobei das Vinylpolymer (I) eine Molekulargewichtsverteilung von weniger als 1,8 aufweist.

3. Härtbare Zusammensetzung nach Anspruch 1 oder 2, wobei das Vinylpolymer (I) eine Hauptkette aufweist, die durch Polymerisation unter Verwendung wenigstens eines Monomers, das aus der aus einem (Meth)acrylmonomer, einem Acrylnitrilmonomer, einem aromatischen Vinylmonomer, einem fluorhaltigen Vinylmonomer und einem siliziumhaltigen Vinylmonomer bestehenden Gruppe ausgewählt ist, als eine Hauptkomponente hergestellt ist.

4. Härtbare Zusammensetzung nach einem der Ansprüche 1 bis 3, wobei das Vinylpolymer (I) ein Poly(meth)acrylat ist.

5. Härtbare Zusammensetzung nach einem der Ansprüche 1 bis 4, wobei das Vinylpolymer (I) ein Polyacrylat ist.

6. Härtbare Zusammensetzung nach einem der Ansprüche 1 bis 5, wobei das Vinylpolymer (I) ein Acrylesterpolymer ist.

7. Härtbare Zusammensetzung nach einem der Ansprüche 1 bis 6, wobei das Vinylpolymer (I) eine durch lebende Radikalpolymerisation hergestellte Hauptkette aufweist.

8. Härtbare Zusammensetzung nach Anspruch 7, wobei die lebende Radikalpolymerisation Atomtransferradikalpolymerisation ist.

9. Härtbare Zusammensetzung nach Anspruch 8, wobei die Atomtransferradikalpolymerisation als einen Katalysator einen Übergangsmetallkomplex mit einem Element aus der 7., 8., 9., 10. oder 11. Gruppe des Periodensystems als ein Zentralmetall verwendet.

10. Härtbare Zusammensetzung nach Anspruch 9, wobei der als ein Katalysator verwendete Metallkomplex ein Komplex eines Metalls ist, das aus der aus Kupfer, Nickel, Ruthenium und Eisen bestehenden Gruppe ausgewählt ist.

11. Härtbare Zusammensetzung nach Anspruch 10, wobei der als ein Katalysator verwendete Metallkomplex ein Kupferkomplex ist.

12. Härtbare Zusammensetzung nach einem der Ansprüche 1 bis 11, wobei die Komponente (A) ein Vinylpolymer ist, das durch die Schritte erhalten ist:
(1) Polymerisieren eines Vinylmonomers durch Atomtransferradikalpolymerisation, um ein Vinylpolymer mit einer terminalen Struktur, die durch die allgemeine Formel (2) dargestellt wird, herzustellen:
-C (R¹) (R²) (X) (2)
wobei R¹ und R² eine an eine ethylenisch ungesättigte Gruppe des Vinylmonomers gebundene Gruppe darstellen und X Chlor, Brom oder Jod darstellt, und
(2) Konvertieren eines terminalen Halogens des Polymers in eine Gruppe, die durch die allgemeine Formel (1) dargestellt wird.

13. Härtbare Zusammensetzung nach einem der Ansprüche 1 bis 12, wobei die Komponente (A) durch die folgenden Schritte hergestellt ist:
Reagieren eines Vinylpolymers mit einer Halogengruppe an dem Ende mit einer Verbindung, die durch die allgemeine Formel (3) dargestellt wird:
M⁺⁻OC (O) C (R^{a}) =CH₂ (3)
wobei R^{a} ein Wasserstoffatom oder eine einwertige organische Gruppe mit 1 bis 20 Kohlenstoffatomen darstellt, und M⁺ ein Alkalimetall-Ion oder quaternäres AmmoniumIon darstellt.

14. Härtbare Zusammensetzung nach Anspruch 13, wobei das Vinylpolymer mit einer Halogengruppe an dem Ende eine terminale Struktur aufweist, die durch die allgemeine Formel (2) dargestellt wird:
-C (R¹) (R²) (X) (2)
wobei R¹ und R² eine an eine ethylenisch ungesättigte Gruppe des Vinylmonomers gebundene Gruppe darstellen, und X Chlor, Brom oder Jod darstellt.

15. Härtbare Zusammensetzung nach einem der Ansprüche 1 bis 12, wobei die Komponente (A) durch die Schritte hergestellt ist:
Reagieren eines Vinylpolymers mit einer Hydroxylgruppe an dem Ende mit einer Verbindung, die durch die allgemeine Formel (4) dargestellt wird:
X¹C (O) C (R^{a}) =CH₂ (4)
wobei R^{a} ein Wasserstoffatom oder eine einwertige organische Gruppe mit 1 bis 20 Kohlenstoffatomen darstellt und X¹ Chlor, Brom oder eine Hydroxylgruppe darstellt.

16. Härtbare Zusammensetzung nach einem der Ansprüche 1 bis 12, wobei die Komponente (A) durch die Schritte hergestellt ist:
(1) Reagieren eines Vinylpolymers mit einer Hydroxylgruppe an dem Ende mit einer Diisocyanatverbindung und
(2) Reagieren der verbleibenden Isocyanatgruppe mit einer Verbindung, die durch die allgemeine Formel (5) dargestellt wird:
HO - R¹ -OC (O) C (R^{a}) =CH₂ (5)
wobei R^{a} ein Wasserstoffatom oder eine einwertige organische Gruppe mit 1 bis 20 Kohlenstoffatomen darstellt und R¹ eine zweiwertige organische Gruppe mit 2 bis 20 Kohlenstoffatomen darstellt.

17. Härtbare Zusammensetzung nach einem der Ansprüche 1 bis 6, wobei das Vinylpolymer (I) eine Hauptkette aufweist, die durch Polymerisation eines Vinylmonomers unter Verwendung eines Kettentransfermittels hergestellt ist.

18. Härtbare Zusammensetzung nach einem der Ansprüche 1 bis 17, wobei das Vinylpolymer (I) ein durchschnittliches Molekulargewicht von 3.000 oder mehr aufweist.

19. Härtbare Zusammensetzung nach einem der Ansprüche 1 bis 18, wobei die Komponente (B) Monoacrylatphenol-Antioxidationsmittel 2-t-Butyl-6-(3-t-butyl-2-hydroxy-5-methylbenzyl)-4-methylphenyl-Acrylat und/oder 2,4-di-t-Amyl-6-[1-(3,5-di-t-amyl-2-hydroxyphenyl)-ethyl]-phenyl-Acrylat ist.

20. Härtbare Zusammensetzung nach einem der Ansprüche 1 bis 19, ferner umfassend (C) einen Polymerisationsinitiator.

21. Härtbare Zusammensetzung nach Anspruch 20, wobei der Polymerisationsinitiator (C) ein Fotopolymerisationsinitiator ist.

22. Härtbare Zusammensetzung nach Anspruch 21, wobei der Fotopolymerisationsinitiator ein Radikalfotopolymerisationsinitiator ist.

23. Härtbare Zusammensetzung nach Anspruch 20, wobei der Polymerisationsinitiator ein (C) Wärmepolymerisationsinitiator ist.

24. Härtbare Zusammensetzung nach Anspruch 23, wobei der Wärmepolymerisationsinitiator aus der aus einem Azoinitiator, einem Peroxid, einem Persulfat und einem Redoxinitiator bestehenden Gruppe ausgewählt ist.

25. Härtbare Zusammensetzung nach einem der Ansprüche 1 bis 24, ferner umfassend Verstärkungssilika als eine essentielle Komponente (D).

26. Härtbare Zusammensetzung nach einem der Ansprüche 1 bis 25, umfassend 0,01 bis 5,0 Gewichtsanteile der Komponente (B) in Bezug auf 100 Gewichtsanteile der Komponente (A).

27. Verfahren zum Verbessern mechanischer Eigenschaften eines gehärteten Produkts, das aus einer härtbaren Zusammensetzung erhalten ist, umfassend einen Schritt des Hinzufügens von (B) Monoacrylatphenol-Antioxidationsmittel zu (A) einem Vinylpolymer, das an dem molekularen Ende wenigstens eine Gruppe aufweist, die durch die allgemeine Formel (1) dargestellt wird:
CH₂=C (R^{a}) -C (O) O- (1)
wobei R^{a} ein Wasserstoffatom oder eine einwertige organische Gruppe mit 1 bis 20 Kohlenstoffatomen darstellt, um die Polymerisationsreaktion zu unterdrücken.

28. Gehärtetes Produkt, das aus der härtbaren Zusammensetzung nach einem der Ansprüche 1 bis 26 erhalten ist.

## Revendications

1. Composition durcissable comprenant :
(A) un polymère vinylique (I) comprenant, à l'extrémité moléculaire, au moins un groupe représenté par la formule générale (1) :
CH₂=C(R^{a})-C(O)O- (1)
dans laquelle R^{a} représente un atome d'hydrogène ou un groupe organique monovalent comportant 1 à 20 atomes de carbone, et
(B) un antioxydant phénolique de monoacrylate.

2. Composition durcissable selon la revendication 1, dans laquelle le polymère vinylique (I) présente une distribution de masse moléculaire inférieure à 1,8.

3. Composition durcissable selon les revendications 1 ou 2, dans laquelle le polymère vinylique (I) comporte une chaîne principale produite par polymérisation en utilisant, en tant que composant principal, au moins un monomère choisi dans le groupe constitué par un monomère (méth)acrylique, un monomère d'acrylonitrile, un monomère de vinyle aromatique, un monomère de vinyle contenant du fluor est un monomère de vinyle contenant du silicium.

4. Composition durcissable selon l'une quelconque des revendications 1 à 3, dans laquelle le polymère vinylique (I) est un poly(méth)acrylate.

5. Composition durcissable selon l'une quelconque des revendications 1 à 4, dans laquelle le polymère vinylique (I) est un polyacrylate.

6. Composition durcissable selon l'une quelconque des revendications 1 à 5, dans laquelle le polymère vinylique (I) est un polymère d'ester acrylique.

7. Composition durcissable selon l'une quelconque des revendications 1 à 6, dans laquelle le polymère vinylique (I) comporte une chaîne principale produite par une polymérisation radicalaire vivante.

8. Composition durcissable selon la revendication 7, où la polymérisation radicalaire vivante est une polymérisation radicalaire par transfert d'atomes.

9. Composition durcissable selon la revendication 8, où la polymérisation radicalaire par transfert d'atomes utilise, en tant que catalyseur, un complexe de métaux de transition comportant un élément du 7^{ème}, 8^{ème}, 9^{ème}, 10^{ème} ou 11^{ème} groupe du tableau périodique en tant que métal central.

10. Composition durcissable selon la revendication 9, où le complexe de métaux utilisé en tant que catalyseur est un complexe d'un métal choisi dans le groupe constitué de cuivre, de nickel, de ruthénium et de fer.

11. Composition durcissable selon la revendication 10, où le complexe de métaux utilisé en tant que catalyseur est un complexe de cuivre.

12. Composition durcissable selon l'une quelconque des revendications 1 à 11, dans laquelle le composant (A) est un polymère vinylique obtenu par les étapes suivantes :
(1) la polymérisation d'un monomère de vinyle par polymérisation radicalaire par transfert d'atomes pour produire un polymère vinylique ayant une structure terminale représentée par la formule générale (2) :
C(R¹) (R²)(X) (2)
dans laquelle R¹ et R² représentent un groupe lié à un groupe éthyléniquement insaturé du monomère de vinyle, et X représente un atome de chlore, de brome ou d'iode ; et
(2) la conversion d'un atome d'halogène terminal du polymère en un groupe représenté par la formule générale (1).

13. Composition durcissable selon l'une quelconque des revendications 1 à 12, dans laquelle le composant (A) est produit par l'étape suivante :
la réaction d'un polymère vinylique comportant un groupe halogène à l'extrémité avec un composé représenté par la formule générale (3) :
M⁺-OC(O)C(R^{a})=CH₂ (3)
dans laquelle R^{a} représente un atome d'hydrogène ou un groupe organique monovalent comportant 1 à 20 atomes de carbone, et M⁺ représente un ion de métal alcalin ou un ion d'ammonium quaternaire.

14. Composition durcissable selon la revendication 13, dans laquelle le polymère vinylique comportant un groupe halogène à l'extrémité a une structure terminale représentée par la formule générale (2) :
-C(R¹) (R²) (X) (2)
dans laquelle R¹ et R² représentent un groupe lié à un groupe éthyléniquement insaturé du monomère de vinyle, et X représente un atome de chlore, de brome ou d'iode.

15. Composition durcissable selon l'une quelconque des revendications 1 à 12, dans laquelle le composant (A) est produit par l'étape suivante :
la réaction d'un polymère vinylique comportant un groupe hydroxyle à l'extrémité avec un composé représenté par la formule générale (4) :
X¹C(O)C(R^{a})=CH₂ (4)
dans laquelle R^{a} représente un atome d'hydrogène ou un groupe organique monovalent comportant 1 à 20 atomes de carbone, et X¹ représente un atome de chlore, de brome ou un groupe hydroxyle.

16. Composition durcissable selon l'une quelconque des revendications 1 à 12, dans laquelle le composant (A) est produit par les étapes suivantes :
(1) la réaction d'un polymère vinylique comportant un groupe hydroxyle à l'extrémité avec un composé diisocyanate ; et
(2) la réaction du groupe isocyanate restant avec un composé représenté par la formule générale (5) :
HO-R'-OC(O)C(R^{a})=CH₂ (5)
dans laquelle R^{a} représente un atome d'hydrogène ou un groupe organique monovalent comportant 1 à 20 atomes de carbone, et R' représente un groupe organique bivalent comportant 2 à 20 atomes de carbone.

17. Composition durcissable selon l'une quelconque des revendications 1 à 6, dans laquelle le polymère vinylique (I) comporte une chaîne principale produite par polymérisation d'un monomère de vinyle en utilisant un agent de transfert de chaîne.

18. Composition durcissable selon l'une quelconque des revendications 1 à 17, dans laquelle le polymère vinylique (I) présente une masse moléculaire moyenne en nombre de 3000 ou plus.

19. Composition durcissable selon l'une quelconque des revendications 1 à 18, dans laquelle le composant (B), un antioxydant phénolique de monoacrylate est l'acrylate de 2-t-butyl-6-(3-t-butyl-2-hydroxy-5-méthylbenzyl)-4-méthylphényle et/ou l'acrylate de 2,4-di-t-amyl-6-[1-(3,5-di-t-amyl-2-hydroxyphényl)éthyl]phényle.

20. Composition durcissable selon l'une quelconque des revendications 1 à 19, comprenant en outre (C) un initiateur de polymérisation.

21. Composition durcissable selon la revendication 20, dans laquelle l'initiateur de polymérisation (C) est un initiateur de photopolymérisation.

22. Composition durcissable selon la revendication 21, dans laquelle l'initiateur de photopolymérisation est un initiateur de photopolymérisation radicalaire.

23. Composition durcissable selon la revendication 20, dans laquelle l'initiateur de polymérisation (C) est un initiateur de polymérisation thermique.

24. Composition durcissable selon la revendication 23, dans laquelle l'initiateur de polymérisation thermique est choisi dans le groupe constitué d'un initiateur azoïque, d'un peroxyde, d'un persulfate et d'un initiateur d'oxydoréduction.

25. Composition durcissable selon l'une quelconque des revendications 1 à 24, comprenant en outre de la silice de renforcement en tant que composant essentiel (D).

26. Composition durcissable selon l'une quelconque des revendications 1 à 25, comprenant de 0,01 à 5,0 parties en poids du composant (B) pour 100 parties en poids du composant (A).

27. Procédé d'amélioration des propriétés mécaniques d'un produit durci obtenu à partir d'une composition durcissable comprenant une étape addition de (B), un antioxydant phénolique de monoacrylate à (A), un polymère vinylique comportant, à l'extrémité moléculaire, au moins un groupe représenté par la formule générale (1) :
CH₂=C(R^{a})-C(O)O- (1)
dans laquelle R^{a} représente un atome d'hydrogène ou un groupe organique monovalent comportant 1 à 20 atomes de carbone, afin de réprimer la réaction de polymérisation.

28. Produit durci obtenu à partir de la composition durcissable selon l'une quelconque des revendications 1 à 26.
